(19) Europäisches Patentamt
European Patent Office
Office européen des brevets

(11) EP 4 066 948 A1

(12) **EUROPEAN PATENT APPLICATION**
published in accordance with Art. 153(4) EPC

(43) Date of publication:
**05.10.2022 Bulletin 2022/40**

(21) Application number: **20894146.8**

(22) Date of filing: **25.11.2020**

(51) International Patent Classification (IPC):
***B05D 1/36*** (2006.01) ***B05D 7/24*** (2006.01)
***C08F 20/28*** (2006.01) ***C09D 133/00*** (2006.01)
***C09D 133/14*** (2006.01) ***C09D 175/04*** (2006.01)
***C09D 183/04*** (2006.01) ***C09D 7/62*** (2018.01)
***C09D 7/63*** (2018.01) ***C09D 7/65*** (2018.01)

(52) Cooperative Patent Classification (CPC):
**B05D 1/36; B05D 7/24; C08F 20/28; C09D 7/62; C09D 7/63; C09D 7/65; C09D 133/00; C09D 133/14; C09D 175/04; C09D 183/04**

(86) International application number:
**PCT/JP2020/043742**

(87) International publication number:
**WO 2021/106902 (03.06.2021 Gazette 2021/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.11.2019 JP 2019215321**
**29.11.2019 JP 2019216800**
**16.11.2020 JP 2020190556**

(71) Applicant: **Kansai Paint Co., Ltd**
**Amagasaki-shi, Hyogo 661-8555 (JP)**

(72) Inventors:
- **MORI, Kenji**
**Hiratsuka-shi, Kanagawa 254-8562 (JP)**
- **OKIYAMA, Haruhiko**
**Hiratsuka-shi, Kanagawa 254-8562 (JP)**
- **HIDAKA, Takahiro**
**Hiratsuka-shi, Kanagawa 254-8562 (JP)**

(74) Representative: **Grünecker Patent- und Rechtsanwälte**
**PartG mbB**
**Leopoldstraße 4**
**80802 München (DE)**

# (54) COATING COMPOSITION AND COATING FILM FORMING METHOD

(57) An object is to providing a coating composition for attaining excellent storage stability of a coating material, excellent stain resistance (a property of preventing stains from adhering or a property of removing stains) of a coating film, and excellent durability of stain resistance of the coating film, and excellent scratch resistance of the coating film, and having transparency, and protecting the appearance for a long period of time, as well as a method of forming the coating film of the same. As a solution, provided is a coating composition comprising a silyl group-containing acrylic resin (A), a silyl group-free acrylic resin containing hydroxyl group (B), a polyisocyanate compound (C), and a catalyst (D), wherein the silyl group-containing acrylic resin (A) includes at least one polydimethyl siloxane segment.

## Description

## Technical Field

The present invention relates to a coating composition which can impart water repellency to, for example, coating surfaces of automobile bodies, trucks, motorcycles, buses, automobile parts, railroad vehicles, industrial equipment, buildings, structures, thus providing excellent stain resistance (a property of preventing stains from adhering or a property of removing stains) and excellent durability of stain resistance, and protecting the appearance of the coating surfaces for a long period of time, and a method of forming the coating film (a coating method) of the same.

## Background Art

Wax has been widely used to protect the coating surfaces of automobile bodies or the like, and to give luster to them. Generally, the wax serves as improving the luster of the coating surfaces immediately after its application, but hardly maintains the initial luster for a long period of time, and should be applied periodically.

On the other hand, the coating surfaces formed on automobile bodies or the like often get dirty by weather conditions such as rain, snow, sleet, and ice formation, as well as environmental pollutants such as mote, dirt, dust, air pollutants, and bird droppings, and the development of simple coating materials and/or coating methods for obscuring these stains has been demanded.

As one measure, for example, Patent Literature 1 discloses a surface treatment agent comprising: an acrylic resin having a hydrolyzable silyl group, a hydroxyl group and a polysiloxane chain; an organopolysiloxane having a hydrolyzable silyl group; and an organopolysiloxane not having a hydrolyzable silyl group, which may be, however, insufficient for realizing all of curability, storage stability, and antifouling durability.

Also, Patent Literature 2 discloses a specific organopolysiloxane composition as an agent for restoring deteriorated coating films and small scratches for automobiles as well as a lustering agent, and describes that this organopolysiloxane composition can restore the deteriorated coating films and form highly durable coating films with excellent luster. However, the composition contains a large amount of volatile components, and because the volatile components volatilize after being coated, a significant volume reduction of the coating film tends to occur over time. For this reason, there is a disadvantage that if this organopolysiloxane composition is applied to, for example, recesses of scratches generated on the coating surface, a coating film shrinks as it dries, which exposes many of the recesses of the scratches again and decreases its lustering effect over time, and accordingly the film easily gets dirty, and adhering dirt components are hard to wipe off.

Also, Patent Literature 3 discloses a coating composition comprising an alkoxysilyl group-containing organopolysiloxane, a catalyst, and a binder, and describes that the composition provides excellent storage stability of a coating material, excellent stain resistance (a property of preventing stains from adhering or a property of removing stains) of coating films and its excellent durability, and can protect the appearance of the coating films for a long period of time. However, if the coating composition in Patent Literature 3 contains a large amount of alkoxysilyl group-containing organopolysiloxane, its compatibility deteriorates and the coating films sometimes become cloudy. Also. If containing a small amount of alkoxysilyl group-containing organopolysiloxane, stain resistance property may not continue for a long period of time. Further, its scratch resistance property is not sufficient.

Also, Patent Literature 4 discloses a coating method for forming a top coat clear coating film on a top coat coloring base coating film, and describes that a coating material which forms the top coat clear coating film contains (A) an organic resin containing hydroxyl group, (B) at least one crosslinking agent selected from a melamine resin and a blocked polyisocyanate compound, and (C) a hydrophilicity imparting agent which is a specific silicon compound and has excellent antifouling, coating performance, and coating appearance. However, the coating film which is hydrophilic can produce an antifouling effect to some extent but has insufficient long-term coating performance like water resistance or weather resistance. Moreover, because used is a coating method applied on moving metal sheets using a curtain method or a die coating method, coating film finish is not sufficient.

## Background Art Literature

### Patent Literature

Patent Literature 1: International Patent Laid-open No. 2006/001510
Patent Literature 2: Japanese Patent Laid-open No. Hei 10-36771
Patent Literature 3: International Patent Laid-open No. 2019/168041

Patent Literature 4: Japanese Patent Laid-open No. Hei 11-57608

## Summary of the Invention

### Problems to Be Solved by the Invention

An object of the present invention is to provide a coating composition which provides excellent storage stability of a coating material, excellent stain resistance (a property of preventing stains from adhering or a property of removing stains) of a coating film and its durability, and excellent scratch resistance of the coating film, and has transparency, and can protect the appearance for a long period of time; and a method of forming a coating film of the same.

### Means for Solving the Problems

As a result of conducting intensive study in earnest to achieve the aforementioned object, the inventors of the present invention found that, a coating composition comprising a silyl group-containing acrylic resin (A), a silyl group-free acrylic resin containing hydroxyl group (B), a polyisocyanate compound (C), and a catalyst (D), wherein the silyl group-containing acrylic resin (A) contains at least one polydimethyl siloxane segment can solve the above-mentioned object, and eventually completed the present invention.

In other words, the present invention provides the following coating composition and method of coating the same.

Item 1: A coating composition comprising a silyl group-containing acrylic resin (A), a silyl group-free acrylic resin containing hydroxyl group (B), a polyisocyanate compound (C), and a catalyst (D), wherein the silyl group-containing acrylic resin (A) contains at least one polydimethyl siloxane segment.

Item 2: The coating composition according to Item 1 comprising a hydroxyl group-containing acrylic resin-coated silica particle (E).

Item 3: The coating composition according to Item 1 or Item 2 comprising an alkoxysilyl group-containing organopolysiloxane (F).

Item 4: The coating composition according to any one of Items 1 to 3, wherein the silyl group-containing acrylic resin (A) comprises 0.1 parts by mass or more of a polymerizable unsaturated monomer (a1) having the polydimethyl siloxane segment in its structure based on 100 parts by mass of all monomers.

Item 5: The coating composition according to any one of Items 1 to 4, wherein the silyl group-containing acrylic resin (A) is obtained by copolymerization of a/the polymerizable unsaturated monomer (a1) having the polydimethyl siloxane segment represented by the following formula (1) and/or (2), a hydrolyzable silyl group-containing polymerizable unsaturated monomer (a2), a hydroxyl group-containing polymerizable unsaturated monomer, and as needed, other polymerizable unsaturated monomers that can be copolymerized with these monomers.

[Chem. 1]

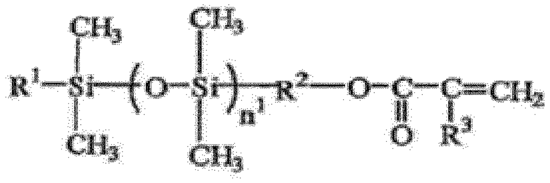

(1)

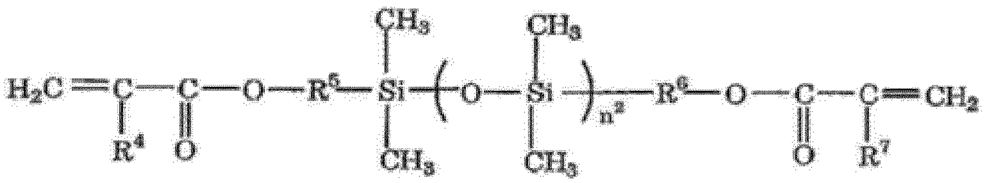

(2)

(in the formula, $R^1$ represents an alkyl group containing 1 to 10 carbon atoms, $R^2$ represents a divalent hydrocarbon group containing 1 to 6 carbon atoms, $R^3$ represents a hydrogen atom or a methyl group, $R^4$ and $R^7$ are identical or different, and each represents a hydrogen atom or a methyl group, $R^5$ and $R^6$ are identical or different, and each represents a divalent hydrocarbon group containing 1 to 6 carbon atoms, and $n^1$ and $n^2$ each indicate the number of repeating dimethyl siloxane units, and are each 6 to 300, or preferably 6 to 100.)

Item 6: A coating composition of multi-pack type, comprising:

a main agent component (I) containing a silyl group-containing acrylic resin (A) containing at least one polydimethyl siloxane segment, a silyl group-free acrylic resin containing hydroxyl group (B); and
a curing agent component (II) containing a polyisocyanate compound (C).

Item 7: A coating film formation method of forming a top coating film by coating the coating composition according to any one of Items 1 to 6.
Item 8: A coating film formation method of performing atomized spray coating of the coating composition according to any one of Items 1 to 6, and forming a top coating film having a cured film thickness of 1 to 50 μm, and then thermally curing it at a temperature of 70 to 200°C.
Item 9: A method of forming a multilayer coating film, comprising sequentially performing:

a step of forming a color coating film by coating a color coating composition;
a step of coating the coating composition according to any one of Items 1 to 6 on the color coating film to form a top coating film; and
a step of thermally curing the color coating film and the top coating film simultaneously.

Item 10: A method of forming a multilayer coating film comprising sequentially performing:

a step of performing atomized spray coating of a color coating composition to form a color coating film having a cured film thickness of 1 to 50 μm;
a step of performing atomized spray coating of the coating composition according to any one of Claims 1 to 6 on the color coating film to form a top coating film having a cured film thickness of 1 to 50 μm; and
a step of thermally curing the color coating film and the top coating film simultaneously at a temperature of 70 to 200°C.

## Effects of the Invention

The coating film obtained from the coating composition of the present invention has excellent transparency, scratch resistance, and excellent stain resistance (a property of preventing stains from adhering or a property of removing stains), which are lasting. Specifically, the coating film obtained from the coating method of the present invention has excellent finish and can maintain the finished appearance for a long period of time even after exposed to weather conditions such as rain, snow, sleet, and ice formation, as well as environmental pollutants such as mote, dirt, dust, air pollutants, and bird droppings.

## Mode for Carrying Out the Invention

Embodiments of the present invention will be hereinafter described in detail.
In addition, it should be understood that the present invention should not be limited to the following embodiments and includes various variations that may be implemented without modifying the essence of the present invention.
In the present specification, "parts" denotes parts by mass, and "%" denotes % by mass.
In the present specification, the term "(meth)acrylate" refers to acrylate and/or methacrylate, and the term "(meth)acrylic acid" refers to acrylic acid and/or methacrylic acid. In addition, the term "(meth)acryloyl" refers to acryloyl and/or methacryloyl. In addition, the term "(meth)acrylamide" refers to acrylamide and/or methacrylamide.
A coating composition according to the first embodiment of the present invention is a coating composition comprising a silyl group-containing acrylic resin (A), a silyl group-free acrylic resin containing hydroxyl group (B), a polyisocyanate compound (C), and a catalyst (D), wherein the silyl group-containing acrylic resin (A) contains at least one polydimethyl siloxane segment.
A coating composition according to the second embodiment of the present invention is a coating composition comprising the silyl group-containing acrylic resin (A), the silyl group-free acrylic resin containing hydroxyl group (B), the polyisocyanate compound (C), the catalyst (D), and a hydroxyl group-containing acrylic resin-coated silica particle (E), wherein the silyl group-containing acrylic resin (A) contains at least one polydimethyl siloxane segment.
A coating composition according to the third embodiment of the present invention is a coating composition comprising the silyl group-containing acrylic resin (A), the silyl group-free acrylic resin containing hydroxyl group (B), the polyisocyanate compound (C), the catalyst (D), and an alkoxysilyl group-containing organopolysiloxane (F), wherein the silyl group-containing acrylic resin (A) contains at least one polydimethyl siloxane segment.
A coating composition according to the fourth embodiment of the present invention is a multi-component coating composition comprising: a main agent component (I) comprising the silyl group-containing acrylic resin (A) containing at least one polydimethyl siloxane segment, the silyl group-free acrylic resin containing hydroxyl group (B); and a curing agent component (II) containing the polyisocyanate compound (C).

The coating composition according to the fourth embodiment of the present invention is a coating composition comprising: a main agent component (I) comprising the silyl group-containing acrylic resin (A) comprising at least one polydimethyl siloxane segment, the silyl group-free acrylic resin containing hydroxyl group (B); and a curing agent component (II) containing the polyisocyanate compound (C).

[Silyl group-containing acrylic resin (A)]

The silyl group-containing acrylic resin (A) that can be used in the coating composition according to the first to the fourth embodiments of the present invention can be preferably used if the acrylic resin contains at least one polydimethyl siloxane segment.

Methods of producing the silyl group-containing acrylic resin (A) include, for example, a method of producing this by adding a polydimethyl siloxane segment in the acrylic resin or a method of producing this by copolymerization of the polymerizable unsaturated monomer (a1) having a polydimethyl siloxane segment and other polymerizable unsaturated monomer.

In the present specification, "polysiloxane" refers to a polymer containing a Si-O-Si bond, "a silyl group" refers to, for example, a silicon compound group such as a trimethylsilyl group or a trimethoxysilyl group and may have a substitutional group, or have no substitutional group.

The polymerizable unsaturated monomer (a1) having the polydimethyl siloxane segment is a component for introducing the polydimethyl siloxane segment into the acrylic resin and imparting water repellency to the surface of the resultant coating film.

The polymerizable unsaturated monomer (a1) having the polydimethyl siloxane segment includes, for example, compounds or the like represented by the following formula (1) or (2).

[Chem. 2]

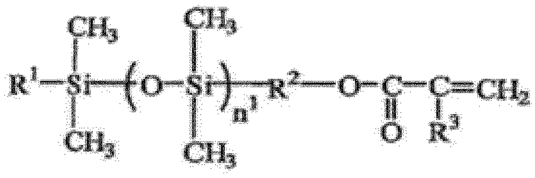

(1)

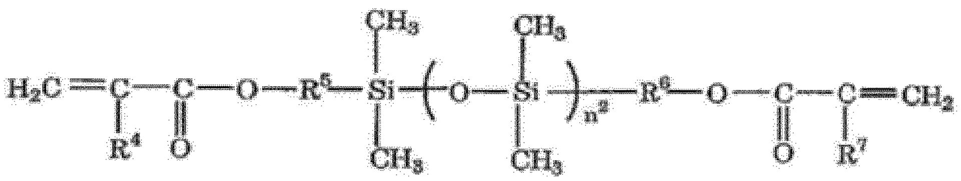

(2)

(in the formula, $R^1$ represents an alkyl group containing 1 to 10 carbon atoms, $R^2$ represents a divalent hydrocarbon group containing 1 to 6 carbon atoms, $R^3$ represents a hydrogen atom or a methyl group, $R^4$ and $R^7$ are identical or different, and each represents a hydrogen atom or a methyl group, $R^5$ and $R^6$ are identical or different, and each represents a divalent hydrocarbon group containing 1 to 6 carbon atoms, and $n^1$ and $n^2$ each indicate the number of repeating dimethyl siloxane units, and are each 6 to 300, and preferably 6 to 100). These may be used alone, or in a combination of two or more.

Examples of commercially available products of the polymerizable unsaturated monomer (a1) include Silaplane FM-0721, Silaplane FM-0711, Silaplane FM-0725 (all manufactured by JNC Corporation, trade name); X-22-174ASX, X-22-174BX, KF-2012, X-22-2426, X-22-2404, X-22-2475 (all manufactured by Shin-Etsu Chemical Co., Ltd., trade name) and the like.

The polymerizable unsaturated monomer (a1) having a polydimethyl siloxane segment generally can have a number-average molecular weight of 300 to 30,000, or preferably 500 to 20,000.

The silyl group-containing acrylic resin (A) contains preferably 0.1 parts or more, more preferably 0.5 to 30 parts, or yet more preferably 1 to 15 parts of the polymerizable unsaturated monomer (a1) having the polydimethyl siloxane segment in its structure based on 100 parts of all monomers from the viewpoint of stain resistance, compatibility with the component (C) (transparency of a coating film).

In addition, the silyl group-containing acrylic resin (A) is preferably copolymerized using in a combination of a hydrolyzable silyl group-containing polymerizable unsaturated monomer (a2) other than the polymerizable unsaturated

monomer (a1) having the polydimethyl siloxane segment with the monomer (a1).

The hydrolyzable silyl group-containing polymerizable unsaturated monomer (a2) is a monomer component for imparting stain resistance (a property of preventing stains from adhering or a property of removing stains). The hydrolyzable silyl group-containing polymerizable unsaturated monomer (a2) is a silyl group containing polymerizable unsaturated monomer other than the polymerizable unsaturated monomer (a1) having the polydimethyl siloxane segment, and includes a compound containing both a polymerizable double bond and a hydrolyzable silyl group per molecule.

The "hydrolyzable silyl group" refers to a silicon-containing group which imparts a silanol group by hydrolysis, such as an alkoxysilyl group, a halogenated silyl group, and the like.

Examples of the hydrolyzable silyl group-containing polymerizable unsaturated monomer (a2) include vinyl tri($C_1$-$C_6$ alkoxy)silane, such as vinyltrimethoxysilane, vinyltriethoxysilane, and vinyltris(2-methoxyethoxy)silane; vinyl tri($C_2$-$C_6$ alkanoyloxy)silane, such as vinyltriacetoxysilane; (meth)acryloyloxyalkyltri-$C_1$-$C_6$ alkoxysilane, such as β-(meth)acryloyloxyethyltrimethoxysilane, γ-(meth)acryloyloxypropyltrimethoxysilane, and γ-(meth)acryloyloxypropyltriethoxysilane; and the like. These may be used alone, or in a combination of two or more.

The silyl group-containing acrylic resin (A) contains preferably 0 to 50 parts, more preferably 10 to 40 parts, of the hydrolyzable silyl group-containing polymerizable unsaturated monomer (a2) based on 100 parts of all constituent monomers.

The silyl group-containing acrylic resin (A) is preferably produced using a polymerizable unsaturated monomer (a3) other than the polymerizable unsaturated monomer (a1) having the polydimethyl siloxane segment and the hydrolyzable silyl group-containing polymerizable unsaturated monomer (a2).

Examples of such polymerizable unsaturated monomer include alkyl or cycloalkyl (meth)acrylates, such as methyl (meth)acrylate, ethyl (meth)acrylate, n-propyl (meth)acrylate, isopropyl (meth)acrylate, n-butyl (meth)acrylate, i-butyl (meth)acrylate, t-butyl (meth)acrylate, n-hexyl (meth)acrylate, octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, t-butylcyclohexyl (meth)acrylate, cyclododecyl (meth)acrylate, and tricyclodecanyl (meth)acrylate;

hydroxyl group-containing polymerizable unsaturated monomer such as monoesterified products of (meth)acrylic acid with a dihydric alcohol having 2 to 8 carbon atoms such as 2-hydroxyethyl (meth)acrylate, 2-hydroxypropyl (meth)acrylate, 3-hydroxypropyl (meth)acrylate, and 4-hydroxybutyl (meth)acrylate, ε-caprolactone-modified products of such monoesterified products of (meth)acrylic acid with a dihydric alcohol having 2 to 8 carbon atoms, N-hydroxymethyl (meth)acrylamide, allyl alcohol, (meth)acrylates having a polyoxyalkylene chain with a hydroxyl group at molecular terminal;

isobornyl group-containing polymerizable unsaturated compounds, such as isobornyl (meth)acrylate;
adamantyl group-containing polymerizable unsaturated compounds, such as adamantyl (meth)acrylate;
aromatic-ring-containing polymerizable unsaturated monomers, such as benzyl (meth)acrylate, styrene, α-methylstyrene, and vinyltoluene;
carboxy group-containing polymerizable unsaturated monomers, such as (meth)acrylic acid, maleic acid, crotonic acid, and β-carboxyethyl acrylate;

nitrogen-containing polymerizable unsaturated monomers having no urethane bond, such as (meth)acrylonitrile, (meth)acrylamide, N,N-dimethylaminoethyl (meth)acrylate, N,N-dimethylaminopropyl (meth)acrylamide, and adduct products of glycidyl (meth)acrylate with amines;

urethane bond-containing polymerizable unsaturated monomers, such as reaction products of an isocyanate group-containing polymerizable unsaturated monomer and a hydroxyl group-containing compound, or reaction products of a hydroxyl group-containing polymerizable unsaturated monomer and an isocyanate group-containing compound;
epoxy group-containing polymerizable unsaturated monomers, such as glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, and allyl glycidyl ether;
(meth)acrylate having a polyoxyethylene chain with an alkoxy group at molecular terminal;
polymerizable unsaturated monomers, such as 2-acrylamido-2-methylpropane-sulfonic acid, 2-sulfoethyl (meth)acrylate, allylsulfonic acid, and 4-styrenesulfonic acid, which contain sulfonic acid groups such as sodium salts and ammonium salts of these sulfonic acids;
phosphoric acid group-containing polymerizable unsaturated monomers, such as 2-acryloyloxyethyl acid phosphate, 2-methacryloyloxyethyl acid phosphate, 2-acryloyloxypropyl acid phosphate, and 2-methacryloyloxypropyl acid phosphate;
perfluoroalkyl (meth)acrylates, such as perfluorobutylethyl (meth)acrylate, and perfluorooctylethyl (meth)acrylate, fluorinated alkyl group-containing polymerizable unsaturated monomers, such as fluoro olefins;

polymerizable unsaturated monomers having a photo-polymerizable functional group, such as maleimide group;
(meth)acrylate having a polyoxyethylene chain with an alkoxy group at molecular terminal;
polymerizable unsaturated monomers having two or more polymerizable unsaturated groups per molecule, such as allyl (meth)acrylate, ethylene glycol di(meth)acrylate, triethylene glycol di(meth)acrylate, tetraethylene glycol di(meth)acrylate, 1,3-butylene glycol di(meth)acrylate, trimethylol propane tri(meth)acrylate, 1,4-butanediol di(meth)acrylate, neopentyl glycol di(meth)acrylate, 1,6-hexanediol di(meth)acrylate, pentaerythritol di(meth)acrylate, pentaerythritol tetra(meth)acrylate, glycerol di(meth)acrylate, 1,1,1-tris-hydroxymethylethane di(meth)acrylate, 1,1,1-trishydroxymethylethane tri(meth)acrylate, 1,1,1-trishydroxymethylpropane tri(meth)acrylate, triallyl isocyanurate, diallyl terephthalate, and divinylbenzene; and the like. These may be used alone, or in a combination of two or more.

For polymerization methods of the acrylic resin, conventionally known methods may be used. For example, it may be produced by solution polymerization of polymerizable unsaturated monomers in an organic solvent. The methods are not, however, limited to this. For example, bulk polymerization, emulsion polymerization, suspension polymerization, and the like may be used. When performing the solution polymerization, continuous polymerization or batch polymerization may be employed, or the polymerizable unsaturated monomers may be introduced all at once or separately, and may be added successively or intermittently.

For radical polymerization initiators used for polymerization, conventionally known compounds may be used. Examples of the radical polymerization initiators include peroxide-based polymerization initiators, such as cyclohexanone peroxide, 3,3,5-trimethylcyclohexanone peroxide, methylcyclohexanone peroxide, 1,1-bis(tert-butylperoxy)-3,3,5-trimethylcyclohexane, 1,1-bis(tert-butylperoxy)cyclohexane, n-butyl-4,4-bis(tert-butylperoxy)valerate, cumenehydroperoxide, 2,5-dimethylhexane-2,5-dihydroperoxide, 1,3-bis(tert-butylperoxy-m-isopropyl)benzene, 2,5-dimethyl-2,5-di(tert-butylperoxy)hexane, diisopropylbenzene peroxide, tert-butylcumyl peroxide, decanoyl peroxide, lauroyl peroxide, benzoyl peroxide, 2,4-dichlorobenzoyl peroxide, di-tert-amyl peroxide, bis(tert-butylcyclohexyl)peroxydicarbonate, tert-butylperoxy benzoate, 2,5-dimethyl-2,5-di(benzoylperoxy)hexane, and tert-butyl peroxy-2-ethylhexanoate; and
azo-based polymerization initiators, such as 2,2'-azobis(isobutyronitrile), 1,1-azobis(cyclohexane-1-carbonitrile), azocumene, 2,2'-azobis(2-methylbutyronitrile), 2,2'-azobisdimethylvaleronitrile, 4,4'-azobis(4-cyanovaleric acid), 2-(t-butylazo)-2-cyanopropane, 2,2'-azobis(2,4,4-trimethylpentane), 2,2'-azobis(2-methylpropane), and dimethyl 2,2'-azobis(2-methylpropionate). These may be used alone, or in a combination of two or more.

The solvents used in the polymerization or dilution are not particularly limited but may include conventionally known solvents such as water, organic solvents, mixtures thereof.

Examples of organic solvents include hydrocarbon solvents, such as n-butane, n-hexane, n-heptane, n-octane, cyclopentane, cyclohexane, and cyclobutane;

aromatic-based solvents, such as toluene and xylene;
ether-based solvents, such as n-butyl ether, dioxane, ethylene glycol monomethyl ether, ethylene glycol monoethyl ether, ethylene glycol monoethyl ether, ethylene glycol monobutyl ether, and diethylene glycol;
ester-based solvents, such as ethyl acetate, n-butyl acetate, isobutyl acetate, ethylene glycol monomethyl ether acetate, and butylcarbitol acetate;
ketone-based solvents, such as methyl ethyl ketone, methyl isobutyl ketone, and diisobutyl ketone;
alcohol-based solvents, such as ethanol, isopropanol, n-butanol, sec-butanol, and isobutanol;
amide-based solvents, such as Equamide (trade name, manufactured by Idemitsu Kosan Co., Ltd.), N,N-dimethylformamide, N,N-dimethylacetamide, N-methylformamide, N-methylacetamide, N-methylpropionamide, N-methyl-2-pyrrolidone. These may be used alone, or in a combination of two or more.

For the solution polymerization in the organic solvent, methods, such as a method of mixing a polymerization initiator, polymerizable unsaturated monomer components, and an organic solvent, and heating the mixture while agitating, and a method of loading an organic solvent in a reaction tank, and dropping therein polymerizable unsaturated monomer components and a polymerization initiator, in a mixed state or separately, over a predetermined period of time while agitating it at temperatures of 60°C to 200°C and, as necessary, while introducing inert gas such as nitrogen or argon, to suppress temperature rise in the system due to reaction heat, are used.

Polymerization may generally be performed for about 1 to 10 hours. After the polymerization at each stage, an additional catalyst step of heating the reaction tank while dripping a polymerization initiator, as needed, may be provided.

The silyl group-containing acrylic resin (A) has a weight-average molecular weight of preferably 1,000 to 100,000, or more preferably 3,000 to 50,000.

It should be noted that, in the present specification, the values of the number-average molecular weight and weight-average molecular weight are determined by converting the retention time (retention volume) measured with gel permeation chromatography (GPC) into molecular weights of a polystyrene based on the retention time (retention volume)

of a standard polystyrene with known molecular weight measured under the same conditions.

Specifically, the measurement can be performed using HLC8120GPC as a gel permeation chromatograph (trade name, manufactured by Tosoh Corporation) together with four columns "TSKgel G-4000HXL", "TSKgel G-3000HXL", "TSKgel G-2500HXL", and "TSKgel G-2000XL" (trade names, all manufactured by Tosoh Corporation) under the conditions of mobile phase tetrahydrofuran, measurement temperature 40°C, flow rate 1 mL/min, and detector RI.

The silyl group-containing acrylic resin (A) is obtained particularly preferably by copolymerization of the polymerizable unsaturated monomer (a1) having the polydimethyl siloxane segment represented by the following formula (1) and/or (2), the hydrolyzable silyl group-containing polymerizable unsaturated monomer (a2), the hydroxyl group-containing polymerizable unsaturated monomer, and as needed, other polymerizable unsaturated monomers that are copolymerizable with these monomers from the viewpoint of compatibility and stain resistance.

The silyl group-containing acrylic resin (A) has a hydroxyl value of preferably about 0 to 250 mgKOH/g, more preferably about 50 to 200 mgKOH/g.

As the amount of the silyl-containing acrylic resin (A) in the coating composition, the solids content of the silyl-containing acrylic resin (A) is preferably 1 to 40% by mass, more preferably 5 to 35% by mass, and yet more preferably 12 to 30% by mass based on the total resin solid mass in the coating composition from the viewpoint of compatibility (transparency of the coating film) and stain resistance and durability.

In this invention, the total resin solid mass in the coating composition refers to the total solid mass of the silyl group-containing acrylic resin (A), the silyl group-free acrylic resin containing hydroxyl group (B), the polyisocyanate compound (C), the hydroxyl group-containing acrylic resin-coated silica particle (E) and/or the alkoxysilyl group-containing organopolysiloxane (F), or the solid mass obtained by adding the solid mass of other resin components that are optionally added thereto.

[Silyl group-free acrylic resin containing hydroxyl group (B)]

The silyl group-free acrylic resin containing hydroxyl group (B) that can be used in the coating composition according to the first to fourth embodiments of the present invention can be produced by copolymerization of the hydroxyl group-containing polymerizable unsaturated monomer and other polymerizable unsaturated monomer which are monomers other than the hydrolyzable silyl group-containing polymerizable unsaturated monomer (a2) of monomers constituting the above-mentioned silyl group-containing acrylic resin (A). The silyl group-free acrylic resin containing hydroxyl group (B) can be produced in the same manner as the above-mentioned silyl group-containing acrylic resin (A) except to contain no silyl group.

The silyl group-free acrylic resin containing hydroxyl group (B) has a weight-average molecular weight of preferably 1,000 to 100,000, or more preferably 3,000 to 50,000.

The silyl group-free acrylic resin containing hydroxyl group (B) has a hydroxyl value of preferably 0.1 to 250 mgKOH/g, more preferably 50 to 200 mgKOH/g.

As the amount of the silyl group-free acrylic resin containing hydroxyl group (B) in the coating composition, it is preferably 1 to 60% by mass, more preferably 5 to 50% by mass, or yet more preferably 10 to 45% by mass based on the total resin solid mass in the coating composition from the viewpoint of compatibility (transparency of the coating film) and stain resistance and durability.

[Polyisocyanate compound (C)]

The polyisocyanate compound (C) that can be used in the coating composition according to the first to fourth embodiments of the present invention include a compound having at least two isocyanate groups per molecule. Examples thereof include aliphatic polyisocyanates, alicyclic polyisocyanates, aromatic-aliphatic polyisocyanates, aromatic polyisocyanates, derivatives of such polyisocyanates, and the like.

Examples of the aliphatic polyisocyanates include aliphatic diisocyanates, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate); aliphatic triisocyanates such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane.

Examples of the alicyclic polyisocyanates include alicyclic diisocyanates, such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or mixtures thereof, methylenebis(4,1-cyclohexanediyl)diisocyanate (common

name: hydrogenated MDI), and norbornane diisocyanate; alicyclic triisocyanates, such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)heptane, and 6-(2-isocyanatoethyl)-2-isocyanatomethyl-2-(3 -isocyanatopropyl)-bicyclo(2.2.1)heptane.

Examples of the aromatic-aliphatic polyisocyanates include aromatic-aliphatic diisocyanates, such as methylenebis(4,1-phenylene)diisocyanate (common name: MDI), 1,3- or 1,4-xylylene diisocyanate or mixtures thereof, ω,ω'-diisocyanato-1,4-diethylbenzene, and 1,3- or 1,4-bis(1-isocyanato-1-methylethyl)benzene (common name: tetramethylxylylene diisocyanate) or mixtures thereof; aromatic-aliphatic triisocyanates, such as 1,3,5-triisocyanatomethylbenzene.

Examples of the aromatic polyisocyanates include aromatic diisocyanates, such as m-phenylene diisocyanate, p-phenylene diisocyanate, 4,4'-diphenyl diisocyanate, 1,5-naphthalene diisocyanate, 2,4-tolylene diisocyanate (common name: 2,4-TDI), or 2,6-tolylene diisocyanate (common name: 2,6-TDI) or mixtures thereof, 4,4'-toluidine diisocyanate, and 4,4'-diphenylether diisocyanate; aromatic triisocyanates, such as triphenylmethane-4,4',4"-triisocyanate, 1,3,5-triisocyanatobenzene, and 2,4,6-triisocyanatotoluene; aromatic tetraisocyanates, such as 4,4'-diphenylmethane-2,2',5,5'-tetraisocyanate.

Examples of the polyisocyanate derivatives include dimers, trimers, biurets, allophanates, urethodiones, urethoimines, isocyanurates, oxadiazinetriones, polymethylene polyphenyl polyisocyanates (crude MDI, polymeric MDI), crude TDI, and the like, of the polyisocyanates.

For the polyisocyanate, compound (C) may be a blocked polyisocyanate compound in which the isocyanate groups of a polyisocyanate compound (C) are blocked. Examples of blocking agents include phenol compounds; lactam compounds; alcohol compounds; oxime compounds; mercaptan compounds; dimethyl malonate; active methylene compounds, such as diethyl malonate; and the like. These may be used alone, or in a combination of two or more. Blocking can easily be performed by mixing an unblocked polyisocyanate compound with a blocking agent.

These polyisocyanate compounds (C) may be used alone, or in a combination of two or more. In that case, an unblocked polyisocyanate compound and a blocked polyisocyanate compound may be used in a combination.

As the amount of the polyisocyanate compounds (C) in the coating composition, it is preferably 0.1 to 50% by mass, more preferably 5 to 45% by mass, or yet more preferably 10 to 40% by mass, based on the total resin solid mass in the coating composition from the viewpoint of curability.

[Catalyst (D)]

The catalyst (D) that can be used in the coating composition according to the first to fourth embodiments of the present invention is a curing catalyst that promotes hydrolysis condensation of a hydrolyzable alkoxysilyl group contained at least in the silyl group-containing acrylic resin (A), wherein one that is known as a material itself can be used as the catalyst of the promotes hydrolysis condensation without particular limitation.

Examples of catalysts (D) include:

organic tin compounds such as diacetyltin diacetate, dibutyltin dilaurate, dibutyltin diacetate, dioctyltin dilaurate, diacetyltin dioctoate, tin octylate, dibutyltin diacetate, dibutyltin dioctoate;
organic aluminum compounds such as aluminum trimethoxide, aluminum tris(acetylacetonate), aluminum tri-n-butoxide, aluminum tris(ethylacetoacetate), aluminum diisopropoxy(ethyl acetoacetate), aluminum acetylacetonate;
organic titanium compounds such as titanium tetra(monoethyl ethoxide), titanium tetra(monoethyl ethoxide), titanium tetra(monobutyl ethoxide), titanium tetrakis(acetylacetonate), tetranormal butyl titanate;
organic zirconium compounds such as zirconium tetra(monomethyl ethoxide), zirconium tetra(monoethyl ethoxide), zirconium tetra(monobutyl ethoxide), zirconium normal propylate, zirconium normal butyrate, zirconium tetrakis(acetylacetonate);
organic zinc compounds such as zinc naphthenate;
organic cobalt compounds such as cobalt octylate, cobalt naphthenate;
boric acid compounds such as trimethyl borate, triethyl borate, tripropyl borate, tributyl borate, triphenyl borate, tri(4-chlorophenyl) borate, trihexafluoroisopropyl borate;
sulfonic acid compounds such as methanesulfonic acid, benzenesulfonic acid, p-toluene sulfonic acid, sulfuric acid;
sulfonic acid salt compounds such as pyridinium p-toluene sulfonate;
aminosilane compounds such as γ-aminopropyltrimethoxysilane, γ-aminopropyltriethoxysilane;
quaternary ammonium salt compounds such as tetramethyl ammonium chloride, benzalkonium chloride;
tertiary amine compounds containing a plurality of nitrogen atoms, such as guanidine and amidine;

phosphate ester compound such as trimethyl phosphate, triethyl phosphate, tripropyl phosphate, tributyl phosphate, trihexyl phosphate, tris(2-ethylhexyl) phosphate, trioctyl phosphate, trinonyl phosphate, tridecyl phosphate, trilauryl phosphate, trimyristyl phosphate, tricetyl phosphate, tristearyl phosphate, trioleyl phosphate, tribehenyl phosphate, monomethyl phosphate, dimethyl phosphate, monoethyl phosphate, diethyl phosphate, monopropyl phosphate, dipropyl phosphate, monoisopropyl phosphate,
diisopropyl phosphate, monobutyl phosphate, dibutyl phosphate, monopentyl phosphate, dipentyl phosphate, monohexyl phosphate, dihexyl phosphate, monooctyl phosphate, dioctyl phosphate, mono 2-ethylhexyl phosphate, di 2-ethylhexyl phosphate, monodecyl phosphate, didecyl phosphate, monoisodecyl phosphate, diisodecyl phosphate, monoundecyl phosphate, diundecyl phosphate, monododecyl phosphate, didodecyl phosphate, monotetradecyl phosphate, ditetradecyl phosphate, monohexadecyl phosphate, dihexadecyl phosphate, monooctadecyl phosphate, dioctadecyl phosphate, monophenyl phosphate, diphenyl phosphate, monobenzyl phosphate, dibenzyl phosphate; phosphite compounds such as triphenyl phosphite, diphenyl phosphite, tri-o-tolyl phosphite, di-o-tolyl phosphite, tri-m-tolyl phosphite, di-m-tolyl phosphite, tri-p-tolyl phosphite, di-p-tolyl phosphite, di-o-chlorophenyl phosphite, tri-p-chlorophenyl phosphite, di-p-chlorophenyl phosphite. These may be used alone, or in a combination of two or more. In particular, it preferably contains at least one phosphate ester compound from the viewpoint of curability.

The catalyst (D) has a number-average molecular weight of preferably 2,000 or less, more preferably 1,800 or less, or yet more preferably 1,500 or less.
The catalyst (D) is preferably 0.01 to 10% by mass, more preferably 0.1 to 7% by mass based on the total resin solid mass in the coating composition.

[Hydroxyl group-containing acrylic resin-coated silica particle (E)]

The coating composition according to the second embodiment of the present invention comprises the silyl group-containing acrylic resin (A), the silyl group-free acrylic resin containing hydroxyl group (B), the polyisocyanate compound (C), the catalyst (D), and further comprises the hydroxyl group-containing acrylic resin-coated silica particle (E).
The coating compositions according to the first, third, and fourth embodiments of the present invention may comprise the silyl group-containing acrylic resin (A), the silyl group-free acrylic resin containing hydroxyl group (B), the polyisocyanate compound (C), the catalyst (D), and further comprise the hydroxyl group-containing acrylic resin-coated silica particle (E).
As the hydroxyl group-containing acrylic resin coated silica particles (E), silica particles coated with a hydroxyl group-containing acrylic resin may preferably be used, and one that is known as a material itself can be used without limitation. For example, silica particles obtained by manufacturing methods including the following steps 1 and 2 are preferable.

Step 1:

A step of mixing and heating silica particles (e1), a monomer having a polymerizable unsaturated group and a hydrolyzable silyl group (e2), and an organic solvent (e3) to obtain a dispersion liquid of silica particles containing polymerizable unsaturated groups.

Step 2 :

A step of mixing and heating the thus-obtained dispersion liquid of silica particles containing polymerizable unsaturated group with a polymerizable unsaturated monomer (e4) containing a hydroxyl group-containing polymerizable unsaturated monomer as at least a part thereof, to obtain hydroxyl group-containing acrylic resin-coated silica particle dispersion.

<Step 1>

Step 1 is a step of mixing and heating silica particles (e1), a monomer having a polymerizable unsaturated group and a hydrolyzable silyl group (e2), and an organic solvent to obtain a dispersion liquid of silica particles containing polymerizable unsaturated groups.

(Silica particles (e1))

Any silica particles (e1), if silica particles which react with and bond to the later described monomer having a polymerizable unsaturated group and a hydrolyzable silyl group (e2) and thereby can undergo surface modification by

the polymerizable unsaturated group, can be used. Such silica particles (e1) include dry silica, wet silica, silica gel, calcium ion-exchanged silica particles, colloidal silica or the like, and in particular, preferably colloidal silica which are silica particles having hydroxyl groups and/or alkoxy groups on the particle surfaces and are dispersed in dispersion medium.

Examples of the colloidal silica include methanol silica sol, IPA-ST, MEKST, NBA-ST, XBA-ST, DMAC-ST, PGM-ST, ST-UP, ST-OUP, ST-20, ST-40, ST-C, ST-N, ST-O, ST-50, ST-OL (all manufactured by Nissan Chemical Corporation). These may be used alone, or in a combination of two or more.

The average primary particle size of silica particles (e1) is preferably 5 to 100 nm, or more preferably 5 to 50 nm. If the average primary particle diameter is less than 5 nm, effects on such as scratch resistance may become insufficient when the dispersion is mixed with other organic materials and used. If the average primary particle diameter exceeds 100 nm, transparency may be impaired.

It should be noted that in this specification, an "average primary particle size" means the median diameter (d50) of the volume-based particle size distribution, and the volume-based particle size distribution is measured by laser diffraction/scattering method. In the present invention, the volume-based particle size distribution of the aforementioned dispersion was measured by a laser diffraction/scattering particle size distribution measuring device "Microtrac NT3300" (trade name, manufactured by Nikkiso Co., Ltd.). In doing so, the sample concentration was adjusted to be within the predetermined transmittance range set for the device.

(Monomer having a polymerizable unsaturated group and a hydrolyzable silyl group (e2))

Examples of a monomer having a polymerizable unsaturated group and a hydrolyzable silyl group (e2) include 3-(meth)acryloyloxypropyltrimethoxysilane, 3-(meth)acryloyloxypropyltriethoxysilane, 2-(meth)acryloyloxyethyltrimethoxysilane, 2-(meth)acryloyloxyethyltriethoxysilane, 3 -(meth) acryloyloxypropylmethyldimethoxysilane, 2-(meth)acryloyloxyethyl-methyl dimethoxysilane, vinyl trimethoxysilane, vinyl triethoxysilane, allyltrimethoxysilane, allyltriethoxysilane, monomers having polymerizable unsaturated groups and hydrolyzable silyl groups obtained by reaction between functional groups other than hydrolyzable silyl groups of various silane coupling agents and unsaturated compounds having functional groups that react with the functional groups, and the like. These may be used alone, or in a combination of two or more.

(Organic solvent (e3))

The organic solvent (e3) is preferably a hydrophilic organic solvent. Examples of organic solvents (e3) include hydrophilic organic solvents such as alcoholic solvents, ether solvents, glycol ether solvents, ester solvents. These may be used alone, or in a combination of two or more. Particularly, alcohols and/or glycol ethers are preferable from the viewpoint of storage stability, scratch resistance, and the like.

<Step 2>

Step 2 is a step of mixing and heating the dispersion liquid of silica particles containing polymerizable unsaturated groups obtained in Step 1 with the polymerizable unsaturated monomer (e4) to obtain the hydroxyl group-containing acrylic resin-coated silica particle dispersion.

Polymerization methods of hydroxyl group-containing acrylic resins in the hydroxyl group-containing acrylic resin-coated silica particles are not especially limited, and a polymerization method that is known as a material itself can be used. Particularly, solution polymerization in which polymerization is performed by dripping the polymerizable unsaturated monomer (e4) and a polymerization initiator etc. in an organic solvent containing silica particles containing polymerizable unsaturated group may be suitably used.

(Polymerizable unsaturated monomer (e4))

Polymerizable unsaturated monomers (e4) are compounds having one or more polymerizable unsaturated groups per molecule.

Examples of the polymerizable unsaturated monomers (e4) include alkyl or cycloalkyl (meth)acrylates, such as methyl (meth)acrylate, ethyl (meth)acrylate, n-propyl (meth)acrylate, isopropyl (meth)acrylate, n-butyl (meth)acrylate, i-butyl (meth)acrylate, t-butyl (meth)acrylate, n-hexyl (meth)acrylate, octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, t-butylcyclohexyl (meth)acrylate, cyclododecyl (meth)acrylate, and tricyclodecanyl (meth)acrylate;

isobornyl group-containing polymerizable unsaturated compounds, such as isobornyl (meth)acrylate;
adamantyl group-containing polymerizable unsaturated compounds, such as adamantyl (meth)acrylate;
aromatic-ring-containing polymerizable unsaturated monomers, such as benzyl (meth)acrylate, styrene, α-methylstyrene, and vinyltoluene;
hydroxyl group-containing polymerizable unsaturated monomers such as monoesterified products of (meth)acrylic acid with a dihydric alcohol (e.g., a dihydric alcohol having 2 to 8 carbon atoms) such as 2-hydroxyethyl (meth)acrylate, 2-hydroxypropyl (meth)acrylate, 3-hydroxypropyl (meth)acrylate, and 4-hydroxybutyl (meth)acrylate; ε-caprolactone-modified products of such monoesterified products of (meth)acrylic acid with a dihydric alcohol (e.g., a dihydric alcohol having 2 to 8 carbon atoms), N-hydroxymethyl (meth)acrylamide; allyl alcohol, (meth)acrylates having a polyoxyalkylene chain with a hydroxyl group at the molecular end;
carboxy group-containing polymerizable unsaturated monomers, such as (meth)acrylic acid, maleic acid, crotonic acid, and β-carboxyethyl acrylate;
nitrogen-containing polymerizable unsaturated monomers having no urethane bond, such as (meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, and adduct products of glycidyl (meth)acrylate with amines;
urethane bond-containing polymerizable unsaturated monomers, such as a reaction product of an isocyanate group-containing polymerizable unsaturated monomer and a hydroxyl group-containing compound, or a reaction product of a hydroxyl group-containing polymerizable unsaturated monomer and an isocyanate group-containing compound;
epoxy group-containing polymerizable unsaturated monomers, such as glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, and allyl glycidyl ether;
(meth)acrylate having polyoxyethylene chain with an alkoxy group at molecular terminal;
polymerizable unsaturated monomers, such as 2-acrylamido-2-methylpropane-sulfonic acid, 2-sulfoethyl (meth)acrylate, allylsulfonic acid, and 4-styrenesulfonic acid, which contain sulfonic acid groups such as sodium salts and ammonium salts of these sulfonic acids;
phosphoric acid group-containing polymerizable unsaturated monomers, such as 2-acryloyloxyethyl acid phosphate, 2-methacryloyloxyethyl acid phosphate, 2-acryloyloxypropyl acid phosphate, and 2-methacryloyloxypropyl acid phosphate;
perfluoroalkyl (meth)acrylates, such as perfluorobutylethyl (meth)acrylate and perfluorooctylethyl (meth)acrylate, fluorinated alkyl group-containing polymerizable unsaturated monomers, such as fluoro olefins;
polymerizable unsaturated monomers having a photo-polymerizable functional group, such as maleimide group;
(meth)acrylate having a polyoxyethylene chain with an alkoxy group at molecular terminal;
polymerizable unsaturated monomers having two or more polymerizable unsaturated groups per molecule, such as allyl (meth)acrylate, ethylene glycol di(meth)acrylate, triethylene glycol di(meth)acrylate, tetraethylene glycol di(meth)acrylate, 1,3-butylene glycol di(meth)acrylate, trimethylol propane tri(meth)acrylate, 1,4-butanediol di(meth)acrylate, neopentyl glycol di(meth)acrylate, 1,6-hexanediol di(meth)acrylate, pentaerythritol di(meth)acrylate, pentaerythritol tetra(meth)acrylate, glycerol di(meth)acrylate, 1,1,1-tris-hydroxymethylethane di(meth)acrylate, 1,1,1-trishydroxymethylethane tri(meth)acrylate, 1,1,1-trishydroxymethylpropane tri(meth)acrylate, triallyl isocyanurate, diallyl terephthalate, and divinylbenzene, and the like. These may be used alone, or in a combination of two or more. Particularly, the polymerizable unsaturated monomer (e4) preferably contains the hydroxy-containing polymerizable unsaturated monomer as at least a part thereof from the viewpoint of, e.g., scratch resistance of the resulting coating film.

When silica particles (e1) component is 100 parts, the ratio of the hydroxyl group-containing acrylic resin coated components obtained from the polymerizable unsaturated monomer (e4) is preferably 5 to 160 parts in the solid mass from the viewpoint of storage stability, scratch resistance, and the like, for example, it can be 5 to 150 parts, or preferably 30 to 120 parts, also it can be, for example, 25 to 160 parts, or preferably 40 to 130 parts.

The hydroxyl group-containing acrylic resin obtained from the polymerizable unsaturated monomer (e4) has a hydroxyl value of preferably 10 to 250 mgKOH/g, or more preferably 50 to 200 mgKOH/g.

As the molecular weight of the hydroxyl group-containing acrylic resin obtained from the polymerizable unsaturated monomer (e4), it is a weight-average molecular weight of preferably 500 to 100,000, or more preferably 1,000 to 20,000.

In the coating composition according to the second embodiment of the present invention, as the amount of the hydroxyl group-containing acrylic resin-coated silica particle (E) in the coating composition, it is preferably 0.1 to 20% by mass, or more preferably 0.5 to 13% by mass, or yet more preferably 1 to 8% by mass based on the total resin solid mass in the coating composition from the viewpoint of scratch resistance and transparency of the coating film.

In the coating compositions according to the first, third, and fourth embodiments of the present invention, as the amount of the hydroxyl group-containing acrylic resin-coated silica particle (E) in the coating composition, it is

preferably 20% by mass or less, more preferably 13% by mass or less, or yet more preferably 8% by mass or less based on the total resin solid mass in the coating composition from the viewpoint of the scratch resistance and transparency of the coating film.

[Alkoxysilyl group-containing organopolysiloxane (F)]

The coating composition according to the third embodiment of the present invention comprises the silyl group-containing acrylic resin (A), the silyl group-free acrylic resin containing hydroxyl group (B), the polyisocyanate compound (C), the catalyst (D), and further comprises the alkoxysilyl group-containing organopolysiloxane (F).

The coating compositions according to the first, second, and fourth embodiments of the present invention comprises the silyl group-containing acrylic resin (A), the silyl group-free acrylic resin containing hydroxyl group (B), the polyisocyanate compound (C), the catalyst (D), and may further comprise the alkoxysilyl group-containing organopolysiloxane (F).

The alkoxysilyl group-containing organopolysiloxane (F) that can be used in the coating composition of the present invention contains organopolysiloxane containing hydrolyzable alkoxysilyl group at a terminal or in a side chain of the molecule. The hydrolyzable alkoxysilyl group in the molecule is hydrolyzed when in contact with moisture, water, and the like in air, and forms silanol groups. These silanol groups undergo a reaction with each other or with functional groups in other resin to increase the molecular weight, thus imparting stain resistance (a property of preventing stains from adhering or a property of removing stains) and durability to the coating film formed from the coating composition of the present invention.

The alkoxysilyl group-containing organopolysiloxane (F) of the present invention preferably contains hydrocarbon groups, such as methyl groups or phenyl groups from the viewpoint of imparting water repellency to the coating film.

Examples of usable commercially available products of alkoxysilyl group-containing organopolysiloxane (F) include "SR2406", "SR2410", "SR2420", "SR2416", "SR2402", and "AY42-161" (all manufactured by Toray Dow Corning Silicone Co., Ltd.), "FZ-3704" and "FZ-3511" (all manufactured by Nippon Unicar Company Limited), "KC-89S", "KR-500", "X-40-9225", "X-40-9246", "X-40-9250", "KR-217", "KR-9218", "KR-213", "KR-510", "X-40-9227", "X-40-9247", "X-41-1053", "X-41-1056", "X-41-1805", "X-41-1810", "X-40-2651", "X-40-2308", "X-40-9238", "X-40-2239", "X-40-2327", "KR-400", "X-40-175", and "X-40-9740" (all manufactured by Shin-Etsu Chemical Co., Ltd.), and "XR31-B1410" (manufactured by Momentive).

The number-average molecular weight of the alkoxysilyl group-containing organopolysiloxane (F) is preferably 500 to 10,000, or more preferably 500 to 8,000 from the viewpoint of the durability of stain resistance (a property of preventing stains from adhering or a property of removing stains).

An extremely small amount of the alkoxysilyl group-containing organopolysiloxane (F) in the coating composition according to the third embodiment of the present invention cannot achieve stain resistance (prevention of stain adhesion or removal of stains), while an excessive amount causes deterioration of compatibility (transparency of the coating film) and tackiness of the coating surface. Therefore, the solids content of the alkoxysilyl group-containing organopolysiloxane (F) is preferably 0.01 to 10% by mass, more preferably 0.07 to 5% by mass, or yet more preferably 0.15 to 3% by mass based on the total resin solid mass in the coating composition.

An extremely small amount of the alkoxysilyl group-containing organopolysiloxane (F) in the coating compositions according to the first, second, and fourth embodiments of the present invention cannot achieve stain resistance (prevention of stain adhesion or removal of stains), while an excessive amount causes deterioration of compatibility (transparency of the coating film) and tackiness of the coating surface. Therefore, the solids content of the alkoxysilyl group-containing organopolysiloxane (F) is preferably 10% by mass or less, more preferably 5% by mass or less, or yet more preferably 3% by mass or less based on the total resin solid mass in the coating composition.

[Other components]

The coating composition according to the first embodiment of the present invention is a coating composition comprising the silyl group-containing acrylic resin (A), the silyl group-free acrylic resin containing hydroxyl group (B), the polyisocyanate compound (C), and the catalyst (D), and may comprise other components, if necessary.

The coating composition according to the second embodiment of the present invention comprises the silyl group-containing acrylic resin (A), the silyl group-free acrylic resin containing hydroxyl group (B), the polyisocyanate compound (C), the catalyst (D), and the hydroxyl group-containing acrylic resin-coated silica particle (E), and may further comprise other components, if necessary.

The coating composition according to the third embodiment of the present invention comprises the silyl group-containing acrylic resin (A), the silyl group-free acrylic resin containing hydroxyl group (B), the polyisocyanate compound (C), the catalyst (D), and the alkoxysilyl group-containing organopolysiloxane (F), and may further comprise other components, if necessary.

The coating composition according to the fourth embodiment of the present invention is the coating composition of multi-pack type comprising: the main agent component (I) comprising the silyl group-containing acrylic resin (A) containing at least one polydimethyl siloxane segment, the silyl group-free acrylic resin containing hydroxyl group (B), and the curing agent component (II) containing the polyisocyanate compound (C) , and the main agent component (I) and/or the curing agent component (II) may comprise other components, if necessary.

Examples of other components include resin components (however, except for the above listed (A), (B), (C), (E), and (F)), pigments, additives, solvents, and the like. These may be used alone, or in a combination of two or more.

The resin components include hydroxyl group-containing resins, curing agents, and the like except for the above listed (A), (B), (C), (E), and (F).

Examples of the types of the hydroxyl group-containing resin include polyester resins, urethane resins, epoxy resins, polyether resins, alkyd resins, polycarbonate resins, fluorine resins, and composite resins thereof. These may be used alone, or in a combination of two or more.

The curing agents include a compound capable of curing the coating composition of the present invention by reacting with functional groups, such as hydroxyl groups, carboxy groups, or epoxy groups in hydroxyl group-containing resins. Examples of the curing agent include amino resins, epoxy group-containing compounds, carboxyl group-containing compounds, carbodiimide-containing compounds, and the like. They may be used alone, or in a combination of two or more.

It is preferable that the coating composition according to the second embodiment of the present invention does not substantially comprise alkoxysilyl group-containing organopolysiloxane components other than the silyl group-containing acrylic resin (A) having polydimethyl siloxane segment from the viewpoint of transparency of the coating film. In this invention, the phrase "does not substantially comprise" means "within the range where various performances are not affected". For example, the range is ordinarily, less than 0.5% by mass, preferably less than 0.1% by mass, more preferably less than 0.05% by mass, yet more preferably zero, based on the total resin solid mass in the coating composition according to the second embodiment of the present invention.

Examples of the pigments include color pigments, extender pigments, glitter pigments, and the like. They may be used alone, or in a combination of two or more without deteriorating their transparency.

These pigments may be added directly to the coating composition, or may be mixed with and dispersed in a pigment dispersant or pigment dispersion resin to form a paste, and then added to the coating material. Pigment dispersants, pigment dispersion resins, and dispersion methods that are known may be used.

Examples of the additives include known additives for paints, such as UV absorbent (e.g., benzotriazole absorbent, triazine absorbent, salicylic acid derivative absorbent, benzophenone absorbent), light stabilizers (e.g., hindered amines), thickening agent, defoaming agents, surface conditioner, anti-settling agents, rustproof agents, chelating agents (e.g., acetylacetone), dehydrating agents, neutralizers, plasticizers, and the like.

From the viewpoint of suppressing hydrolysis, the coating composition of the present invention preferably contains a dehydrating agent that is known as a material itself.

Examples of the dehydrating agent include metal alkoxides, such as aluminum isopropylate, aluminum sec-butyrate, tetraisopropyl titanate, tetranormal butyl titanate, zirconium normal butyrate, ethyl silicate, and vinyltrimethoxysilane;

organic alkoxy compounds, such as methyl orthoformate, ethyl orthoformate, methyl orthoacetate, ethyl orthoacetate, isopropyl orthoacetate, and dimethoxypropane;
monofunctional isocyanates, such as Additive TI (trade name, manufactured by Sumika Bayer Urethane Co., Ltd.), and the like. They may be used alone, or in a combination of two or more.

As the amount of the dehydrating agent in the coating composition, it is 0.01 to 15% by mass, and preferably 0.1 to 8% by mass based on the total resin solid mass in the coating composition.

As the solvent, the solvents mentioned above in the "Silyl group-containing acrylic resin (A)" section can be preferably used.

[Coating composition of multi-pack type]

The coating composition according to the fourth embodiment of the present invention is the coating composition of multi-pack type comprising: the main agent component (I) comprising the silyl group-containing acrylic resin (A) containing at least one polydimethyl siloxane segment, the silyl group-free acrylic resin containing hydroxyl group (B), and the curing agent component (II) containing the polyisocyanate compound (C).

The coating composition of multi-pack type containing the main component (I) and the curing agent composition (II) can impart storage stability.

If the coating composition according to the second embodiment of the present invention is a coating composition

of multi-pack type, for example, the main agent component (I) preferably comprises the silyl group-containing acrylic resin (A), the silyl group-free acrylic resin containing hydroxyl group (B), and the hydroxyl group-containing acrylic resin-coated silica particle (E), and the curing agent composition (II) preferably contains the polyisocyanate compound (C) and the catalyst (D).

If the coating composition according to the third embodiment of the present invention is the coating composition of multi-pack type, for example, the main agent component (I) preferably comprises the silyl group-containing acrylic resin (A), the silyl group-free acrylic resin containing hydroxyl group (B), and alkoxysilyl group-containing organopolysiloxane (F), and the curing agent (II) preferably comprise the polyisocyanate compound (C) and the catalyst (D).

In the coating composition according to the fourth embodiment of the present invention, as the silyl group-containing acrylic resin (A), the silyl group-free acrylic resin containing hydroxyl group (B), the polyisocyanate compound (C), and the catalyst (D), the hydroxyl group-containing acrylic resin-coated silica particle (E), and the alkoxysilyl group-containing organopolysiloxane (F), those that are described above can be listed.

In the coating composition according to the fourth embodiment of the present invention, the term "coating composition of multi-pack type" refers to a coating composition that is used by mixing two or more liquid components (preferably two liquid components) when coating, and is distinguished from a "one-pack type coating composition," in which components are already mixed from the start of its production. It should be noted that the phrase "mixing when coating" includes mixing in a coating device, mixing in a pipe, mixing in a paint storage tank, and the like, all of which can be used suitably. From the viewpoint of storage stability, when to mix the coating composition is preferably 0.01 seconds to 3 months before application, more preferably 0.1 seconds to 10 days before coating, and further preferably 0.1 seconds to 10 hours before coating.

[Painting method]

The thus-obtained coating composition of the present invention can be coated on the work to be coated.

Examples of the painting method include known methods such as atomized spray coating (air-spray coating, airless spray coating, rotary atomized spray coating), brush coating, dip coating, and roll coating. Particularly, atomized spray coating is preferable from the viewpoint of the completion of the coating film.

Examples of the work to be painted include, but are not particularly limited to, surfaces of various base materials, and cured or uncured coating surfaces or the like on which coating materials are coated.

Examples of base materials include metals, such as iron, zinc, iron-zinc alloys, and steel plates; inorganic base materials, such as wood, concrete, gypsum plate, slate, siding materials, porcelain tile wall surfaces, lightweight cellular concrete, mortar, brick, stone materials, and glass; plastic base materials; leather; fibers; and the like.

On the other hand, the cured or uncured coating surfaces or the like on which coating materials are coated are not especially limited. Examples thereof include a top coating film formed by coating a solid color coating material, a top coating film formed by coating a metallic coating material, a top coating film formed by coating a light interference coating material, a top coating film formed by coating a clear coating material, a multilayer coating film formed by sequentially coating two or more top coats selected from solid color coating materials, metallic coating materials, and clear coating materials, and the like.

Particularly, a method of forming a multilayer coating film comprising sequentially performing: a step of forming a color coating film (a cured film thickness of 1 to 50 μm is preferable, and 7 to 40 μm is more preferable) by coating a color coating composition, a step of coating the coating composition of the present invention on the color coating film and forming the top coating film, and a step of thermally curing the color coating film and the top coating film simultaneously is preferable.

The uncured coating film obtained by coating the coating composition of the present invention to the work to be coated may be subjected to preheating (preliminary drying) or air blowing under conditions where the coating film is not substantially cured. The preheating can be performed at a temperature of preferably about 40 to 100°C, more preferably about 50 to 90°C, or yet more preferably about 60 to 80°C, for preferably about 30 seconds to 15 minutes, or more preferably about 1 to 10 minutes. Further, in general, the air blowing can be performed by introducing air heated to a normal temperature or to a temperature of about 25 to 80°C for about 30 seconds to about 15 minutes to the coating surface of the work to be painted.

The uncured coating film is then heated to cure the coating film.

The uncured coating film can be cured by normal coating-film heating (baking) means, such as hot-air heating, infrared heating, or high-frequency heating.

The uncured coating film is heated at temperatures of preferably 70 to 200°C, more preferably 80 to 160°C, for preferably 10 to 60 minutes, or more preferably 15 to 40 minutes.

This can suitably cure the uncured coating film.

The cured film thickness of the coating film obtained by coating the coating composition of the present invention is preferably 1 to 50 μm, more preferably 10 to 40 μm, or yet more preferably 12 to 40 μm.

## Examples

Although the present invention is described in more detail below with reference to Examples and Comparative Examples, the present invention is not limited thereto. In each example, "parts" denotes parts by mass, and "%" denotes % by mass.

[Silyl group-containing acrylic resin]

<Manufacturing Example 1>

(Manufacturing of acrylic resin (A1))

200 parts of Swasol 1000 (Note 1) and 150 parts of n-butanol were introduced in a reaction container equipped with a thermometer, a thermostat, a stirrer, a reflux condenser, a nitrogen introduction tube, and a drip device. After replacement with nitrogen, the resultant was maintained at 120°C (±10°C). A monomer mixture shown below was dripped thereto over 3 hours.

{Monomer Mixture}

Styrene: 100 parts
2-ethylhexyl acrylate: 400 parts
2-hydroxyethyl methacrylate: 200 parts
KBM-503 (Note 2): 300 parts
t-butylperoxy-2-ethylhexanoate: 40 parts

After 1 hour from the completion of dripping, a solution obtained by dissolving 5 parts of t-butylperoxy-2-ethylhexanoate in 200 parts of Swasol 1000 (Note 1) was dripped thereto over 1 hour. After the completion of dripping, the resultant was further maintained for 1 hour at 120°C (±10°C), and Swasol 1000 (Note 1) was then added to adjust the solids content, eventually an acrylic resin (A1) solution having a solids content of 50% was obtained. The acrylic resin (A1) had a hydroxyl value of 86 mgKOH/g and a weight-average molecular weight of 10,000.
(Note 1) Swasol 1000: trade name, manufactured by Cosmo Oil Co., Ltd., an aromatic hydrocarbon solvent.

<Manufacturing Examples 2 to 6>

(Manufacturing of acrylic resins (A2) to (A6))

Acrylic resin (A2) to (A6) solutions were obtained in the same manner as in Manufacturing Example 1, except that the monomer formulations shown in Table 1 were employed.

[Table 1]

| Manufacturing Examples | 1 | 2 | 3 | 4 | 5 | 6 |
|---|---|---|---|---|---|---|
| Acrylic resin name | (A1) | (A2) | (A3) | (A4) | (A5) | (A6) |
| Styrene | 100 | 100 | 100 | 100 | 100 | 100 |
| 2-ethylhexyl acrylate | 400 | 396 | 360 | 660 | 200 | 560 |
| 2-hydroxyethyl methacrylate | 200 | 200 | 200 | 200 | 200 | |
| KBM-503 (Note 2) | 300 | 300 | 300 | | 300 | 300 |
| X-22-174ASX (Note 3) | | 4 | 40 | 40 | 200 | 40 |

(Note 2) KBM-503: trade name, manufactured by Shin-Etsu Chemical Co., Ltd., 3-methacryloxypropyltrimethoxysilane.
(Note 3) X-22-174ASX : trade name, manufactured by Shin-Etsu Chemical Co., Ltd., one-end type methacryl-modified polydimethylsiloxane

[Silyl group-free acrylic resin containing hydroxyl group]

<Manufacturing Example 7>

(Manufacturing of acrylic resin (B1))

200 parts of "Swasol 1000" and 150 parts of n-butanol were introduced in a reaction container equipped with a thermometer, a thermostat, a stirrer, a reflux condenser, a nitrogen introduction tube, and a drip device. After replacement with nitrogen, the resultant was maintained at 120°C (±10°C). A monomer mixture shown below was dripped thereto over 3 hours.

{Monomer Mixture}

Styrene: 200 parts
n-butyl acrylate: 500 parts
2-hydroxyethyl methacrylate: 300 parts
t-butylperoxy-2-ethylhexanoate: 40 parts

After one hour from the completion of dripping, a solution obtained by dissolving 5 parts of t-butylperoxy-2-ethylhexanoate in 200 parts of Swasol 1000 (Note 1) was dripped thereto over 1 hour. After the completion of dripping, the resultant was further maintained for 1 hour at 120°C (±10°C), and Swasol 1000 was added to adjust the solids content, finally an acrylic resin (B1) solution having the solids content of 50% was obtained. The acrylic resin (B1) had a hydroxyl value of 130 mgKOH/g and a weight-average molecular weight of 10,000.

[Hydroxyl group-containing acrylic resin-coated silica particle (E)]

<Manufacturing Example 8>

In a separable flask equipped with a reflux condenser, a thermometer and a stirrer, 333 parts (100 parts of solid content) of PGM-ST (trade name, manufactured by Nissan Chemical Corporation, silica average primary particle size: 15 nm, silica concentration: 30% by mass, dispersion medium: propylene glycol monomethyl ether) and 10 parts of deionized water were placed. 10 parts of KBM-503 (trade name, manufactured by Shin-Etsu Chemical Co., Ltd., 3-methacryloxypropyltrimethoxysilane) were added, and the dehydration-condensation reaction was carried out while stirring at 80°C for 2 hours, and then 0.03 parts of tetra-n-butylammonium fluoride were added and the reaction continued while stirring for another 1 hour. After completion of the reaction, 30 parts of propylene glycol monomethyl ether were added, followed by distillation of the volatile components under reduced pressure to obtain a dispersion liquid of silica particles containing polymerizable unsaturated group with 40% solids of silica particles having surfaces modified.

Subsequently, 130 parts of propylene glycol monomethyl ether were introduced to a separable flask equipped with a reflux condenser, a thermometer, a stirrer, and a nitrogen gas inlet, which were heated to 100°C under nitrogen gas ventilation. After reaching 100°C, a mixture of 275 parts of the dispersion liquid of silica particles containing polymerizable unsaturated group (110 parts of solids), 20 parts of styrene, 35 parts of 4- hydroxybutyl acrylate, 44 parts of isobornyl acrylate, 1 part of acrylic acid, 2.5 parts of 2,2-Azobis (2-methylbutyronitrile) (trade name V-59, manufactured by Wako Pure Chemical Industries, Ltd.) were dripped over 2 hours, and then matured at 100°C over one hour, and thereafter a mixed solution of 0.83 parts of V-59 and 20 parts of propylene glycol monomethyl ether was dripped over 0.5 hours, and then matured over another two hours. The polymerization rate obtained from the nonvolatile content was 99%. Then ethoxyethyl propionate was added and the solvent was replaced by azeotropic distillation under reduced pressure, and a hydroxyl group-containing acrylic resin-coated silica particle (E1) solution with actual measured non-volatile components of 40% was obtained.

<Manufacturing Examples 9 to 11>

The solutions of hydroxyl group-containing acrylic resin-coated silica particles (E2) to (E4) were obtained in the same manner as in Manufacturing Example 8, except that the amounts shown in Table 2 were employed. The amounts in Table 2 are values of the solid content mass or active ingredient mass.

[Table 2]

| Manufacturing Examples | 8 | 9 | 10 | 11 |
|---|---|---|---|---|
| Name of hydroxyl group-containing acrylic resin-coated silica particle | (E1) | (E2) | (E3) | (E4) |
| Dispersion liquid of silica particles containing a polymerizable unsaturated group | 110 | 110 | 110 | 110 |
| Styrene | 20 | 20 | 6 | 30 |
| 4-hydroxybutyl acrylate | 35 | 5 | 10.5 | 52.5 |
| n-butyl acrylate | | 30 | | |
| Isobornyl acrylate | 44 | 44 | 13.2 | 66 |
| Acrylic acid | 1 | 1 | 0.3 | 1.5 |
| V-59 | 2.5 | 2.5 | 0.75 | 3.75 |
| Hdroxy value (mgKOH/g) | 152 | 20 | 152 | 152 |
| Acrylic resin ratio to 100 parts of silica particles (parts) | 100 | 100 | 30 | 150 |

[Non-Aqueous Dispersion-Type Acrylic Resin]

<Manufacturing Example 12>

93 parts of heptane and 98 parts of the later described "55% polymer dispersion stabilizer liquid" were introduced in a four-necked flask equipped with a stirrer, a thermometer, a cooling tube, and a nitrogen gas inlet, and heated and refluxed. A mixture of 15 parts of styrene, 40 parts of methyl methacrylate, 30 parts of acrylonitrile, 15 parts of 2-hydroxyethyl methacrylate, and 1.5 parts of t-butylperoxy-2-ethylhexanoate was dripped over 3 hours, and was matured for another 2 hours, and a non-aqueous dispersion-type acrylic resin was obtained. The resulting non-aqueous dispersion-type acrylic resin was a milky-white stable low-viscosity polymer dispersion liquid having a mass solids concentration of 53%, a Gardner viscosity of B, and an average particle size (measured using an electron microscope) of 0.2 to 0.3 $\mu$m.

{55% polymer dispersion stabilizer liquid}

40 parts of isobutyl acetate and 40 parts of toluene were introduced in a four-necked flask equipped with a stirrer, a thermometer, a cooling tube, and a nitrogen gas inlet, and heated and refluxed. A mixture of 10 parts of styrene, 49 parts of isobutyl methacrylate, 30 parts of 2-ethylhexyl methacrylate, 11 parts of 2-hydroxyethyl methacrylate, and 2 parts of azobisisobutyronitrile was dripped over 3 hours. After dripped, maturation was performed for 2 hours, and a polymer dispersion stabilizer liquid was obtained. The resulting polymer dispersion stabilizer liquid had a mass solids concentration of 55%, a Gardner viscosity of G, and a weight-average molecular weight of 16,000.

[Main agent]

<Manufacturing Example 13>

(Main agent component (1-1))

0.5 parts of X-40-9250 (trade name, alkoxysilyl group-containing organopolysiloxane, manufactured by Shin-Etsu Chemical Co., Ltd.) , 40 parts of the acrylic resin (A1) obtained in Manufacturing Example 1 (resin solids content 20 parts), 80 parts of the acrylic resin (B1) obtained in Manufacturing Example 7 (resin solids content 40 parts), 9.4 parts of non-aqueous dispersion-type acrylic resin obtained in Manufacturing Example 12 (resin solids content 5 parts), 1 part of NEOSTANN U-100 (trade name, dibutyltin dilaurate, manufactured by Nitto Kasei Co., Ltd., solids content 100%), 0.2 parts (solids content 0.1 parts) of BYK-300 (trade name, manufactured by BYK-Chemie, a surface conditioner, active ingredient 52%), 2.0 parts of TINUVIN 900 (trade name, a benzotriazole ultraviolet absorber, manufactured by BASF, active ingredient 100%), 1 part of TINUVIN 292 (trade name, a hindered amine light stabilizer, manufactured by BASF, active ingredient 100%), and 5 parts of methyl orthoacetate were uniformly mixed. Further, Swasol 1000 (trade name, manufactured by Cosmo Oil Co., Ltd., an aromatic hydrocarbon solvent) was added thereto, and the resulting mixture was sufficiently stirred with a dispersant to adjust the viscosity at 20°C with a Ford Cup No. 4 to 25 seconds, and the

main agent component (1-1) was obtained.

<Manufacturing Examples 14 to 45>

(Main agent components (1-2) to (1-33))

Main agent components (1-2) to (1-33) were obtained in the same manner as in Manufacturing Example 13 except that types and/or the amount used of (A), (B), (E), (F), and the non-aqueous dispersion-type acrylic resin were used as shown in Table 3 to Table 6.

<Manufacturing Example 46>

(Curing agent component (II-1))

35 parts of Sumidur N3300 (trade name, manufactured by Sumika Bayer Urethane Co., Ltd., an isocyanurate of hexamethylene diisocyanate, solids content 100%, NCO content 21.8%) and 0.5 parts of tris(2-ethylhexyl) phosphate were uniformly mixed. Further, Swasol 1000 (trade name, manufactured by Cosmo Oil Co., Ltd., an aromatic hydrocarbon solvent) was added thereto, and the resulting mixture was sufficiently stirred with a dispersant to adjust the solvent so that the viscosity at 20°C with a Ford Cup No. 4 was 25 seconds, and the curing agent component (II-1) was obtained.

<Manufacturing Example 47>

(Curing agent component (II-2))

35 parts of Sumidur N3300 (trade name, manufactured by Sumika Bayer Urethane Co., Ltd., an isocyanurate of hexamethylene diisocyanate, solids content 100%, NCO content 21.8%) and Swasol 1000 (trade name, manufactured by Cosmo Oil Co., Ltd., an aromatic hydrocarbon solvent) were added, and the resulting mixture was sufficiently stirred with a dispersant to adjust the solvent so that the viscosity at 20°C with a Ford Cup No. 4 was 25 seconds, and the curing agent component (II-2) was obtained.

[Coating Composition]

<Examples 1 to 24 and Comparative Examples 1 to 9>

(Coating materials (X-1) to (X-33))

The main agent components and the curing agent components obtained in the above-mentioned Manufacturing Examples 1 to 47 were blended and mixed in the quantitative ratio described in Table 3 to Table 6. Subsequently, they were uniformly stirred with a dispersant and the coating materials (X-1) to (X-33) were obtained.

The coating compositions pertaining to Examples 1 to 24 and Comparative Examples 1 to 9 were subjected to evaluation tests for storage stability, stain resistance (initial, after accelerated weathering test), transparency, and scratch resistance (gloss retention) of the coating films. The results are shown in Table 3 to Table 6.

As the evaluation, "S," "A," and "B" are acceptable, and "C" is failure. When at least one of the evaluation tests is unsatisfactory, the paint is not acceptable.

[Table 3]

| Examples and Comparative Examples | Examples | | | | | | | |
|---|---|---|---|---|---|---|---|---|
| | 1 | 2 | 3 | 4 | 5 | 6 | 7 | 8 |
| Paint name | X-1 | X-2 | X-3 | X-4 | X-5 | x-6 | X-7 | X-8 |

(continued)

| Examples and Comparative Examples | | | Examples | | | | | | | |
|---|---|---|---|---|---|---|---|---|---|---|
| | | | 1 | 2 | 3 | 4 | 5 | 6 | 7 | 8 |
| Main agent component (I) | Manufacturing Examples | | 13 | 14 | 15 | 16 | 17 | 18 | 19 | 20 |
| | Name of main agent component | | I-1 | I-2 | I-3 | I-4 | I-5 | I-6 | I-7 | I-8 |
| | (A) | Acrylic resins (Al) | | | | | | | | |
| | | Acrylic resins (A2) | | | | | | | | 20 |
| | | Acrylic resins (A3) | 20 | 20 | 20 | 20 | 20 | 20 | 20 | |
| | | Acrylic resins (A4) | | | | | | | | |
| | | Acrylic resins (A5) | | | | | | | | |
| | | Acrylic resins (A6) | | | | | | | | |
| | (B) | Acrylic resins (B1) | 40 | 40 | 40 | 40 | 40 | 40 | 40 | 40 |
| | (E) | Hydroxyl group-containing acrylic resin-coated silica particles (E1) | | | | | | | | |
| | | Hydroxyl group-containing acrylic resin-coated silica particles (E2) | | | | | | | | |
| | | Hydroxyl group-containing acrylic resin-coated silica particles (E3) | | | | | | | | |
| | | Hydroxyl group-containing acrylic resin-coated silica particles (E4) | | | | | | | | |
| | | Silica particle (PGM-ST) | | | | | | | | |
| | (F) | X-40-9250 | 0.5 | | | | 0.05 | 0.1 | 5 | 0.5 |
| | | XR31-B1410 (Note 4) | | 0.5 | | | | | | |
| | | KR-500 (Note 5) | | | 0.5 | | | | | |
| | | KR-510 (Note 6) | | | | 0.5 | | | | |
| | Non-aqueous dispersion-type acrylic resin | | 5 | 5 | 5 | 5 | 5 | 5 | 5 | 5 |
| Curing agent component (II) | Name of curing agent component | | II-1 | II-1 | II-1 | II-1 | II-1 | II-1 | II-1 | II-1 |
| | (C) | Sumidur N3300 | 35 | 35 | 35 | 35 | 35 | 35 | 35 | 35 |
| | (D) | Tris (2-ethylhexyl) phosphate | 0.5 | 0.5 | 0.5 | 0.5 | 0.5 | 0.5 | 0.5 | 0.5 |

(continued)

| Examples and Comparative Examples | | Examples | | | | | | | |
|---|---|---|---|---|---|---|---|---|---|
| | | 1 | 2 | 3 | 4 | 5 | 6 | 7 | 8 |
| Evaluation test | Storage stability | S | S | S | S | S | S | S | S |
| | Stain resistance (initial) | S | S | S | S | B | A | S | A |
| | Stain resistance (after accelerated weathering test) | S | S | S | S | B | B | S | B |
| | Transparency of coated film | A | A | A | A | A | A | B | A |
| | Scratch resistance (gloss retention) | B | B | B | B | B | B | B | B |

[Table 4]

| Examples and Comparative Examples | | | | | | | | |
|---|---|---|---|---|---|---|---|---|
| | 9 | 10 | 11 | 12 | 13 | 14 | 15 | 16 |
| Paint name | X-9 | X-10 | X-11 | X-12 | X-13 | X-14 | X-15 | X-16 |

(continued)

| Examples and Comparative Examples | | | 9 | 10 | 11 | 12 | 13 | 14 | 15 | 16 |
|---|---|---|---|---|---|---|---|---|---|---|
| Main agent component (I) | Manufacturing Examples | | 21 | 22 | 23 | 24 | 25 | 26 | 27 | 28 |
| | Name of main agent component | | 1-9 | 1-10 | 1-11 | 1-12 | 1-13 | 1-14 | 1-15 | 1-16 |
| | (A) | Acrylic resins (Al) | | | | | | | | |
| | | Acrylic resins (A2) | | | | | | | | |
| | | Acrylic resins (A3) | | | | 3 | 10 | 40 | 20 | 20 |
| | | Acrylic resins (A4) | 20 | | | | | | | |
| | | Acrylic resins (A5) | | 20 | | | | | | |
| | | Acrylic resins (A6) | | | 20 | | | | | |
| | (B) | Acrylic resins (B1) | 40 | 40 | 40 | 57 | 50 | 20 | 40 | 40 |
| | | Hydroxyl group-containing acrylic resin-coated silica particles (E1) | | | | | | | 5 | |
| | | Hydroxyl group-containing acrylic resin-coated silica particles (E2) | | | | | | | | |
| | | Hydroxyl group-containing acrylic resin-coated silica particles (E3) | | | | | | | | |
| | | Hydroxyl group-containing acrylic resin-coated silica particles (E4) | | | | | | | | |
| | | Silica particles (PGM-ST) | | | | | | | | 2.5 |
| | (F) | X-40-9250 | 0.5 | 0.5 | 0.5 | 0.5 | 0.5 | 0.5 | 0.5 | 0.5 |
| | | XR31-B1410 (Note 4) | | | | | | | | |
| | | KR-500 (Note 5) | | | | | | | | |
| | | KR-510 (Note 6) | | | | | | | | |
| | Non-aqueous dispersion-type acrylic resin | | 5 | 5 | 5 | 5 | 5 | 5 | 5 | 5 |
| Curing agent component (II) | Name of curing agent component | | II-1 | II-1 | II-1 | II-1 | II-1 | II-1 | II-1 | II-1 |
| | (C) | Sumidur N3300 | 35 | 35 | 35 | 35 | 35 | 35 | 35 | 35 |
| | (D) | Tris (2-ethylhexyl) phosphate | 0.5 | 0.5 | 0.5 | 0.5 | 0.5 | 0.5 | 0.5 | 0.5 |

(continued)

| Examples and Comparative Examples | | | | | | | | | |
|---|---|---|---|---|---|---|---|---|---|
| | | 9 | 10 | 11 | 12 | 13 | 14 | 15 | 16 |
| Evaluation test | Storage stability | S | S | S | S | S | S | S | S |
| | Stain resistance (initial) | A | S | S | B | A | S | S | S |
| | Stain resistance (after accelerated weathering test) | B | S | B | B | A | S | S | A |
| | Transparency of coated film | A | B | A | A | A | B | A | A |
| | Scratch resistance (gloss retention) | B | B | B | B | B | B | S | A |

[Table 5]

| Examples and Comparative Examples | Examples | | | | | | | |
|---|---|---|---|---|---|---|---|---|
| | 17 | 18 | 19 | 20 | 21 | 22 | 23 | 24 |
| Paint name | X-17 | X-18 | X-19 | X-20 | X-21 | X-22 | X-23 | X-24 |

(continued)

| Examples and Comparative Examples | | | Examples | | | | | | | |
|---|---|---|---|---|---|---|---|---|---|---|
| | | | 17 | 18 | 19 | 20 | 21 | 22 | 23 | 24 |
| Main agent component (I) | Manufacturing Examples | | 29 | 30 | 31 | 32 | 33 | 34 | 35 | 36 |
| | Name of main agent component | | 1-17 | 1-18 | 1-19 | 1-20 | 1-21 | 1-22 | 1-23 | 1-24 |
| | (A) | Acrylic resins (A1) | | | | | | | | |
| | | Acrylic resins (A2) | | | | | | | | |
| | | Acrylic resins (A3) | 20 | 20 | 20 | 20 | 20 | 20 | 20 | 20 |
| | | Acrylic resins (A4) | | | | | | | | |
| | | Acrylic resins (A5) | | | | | | | | |
| | | Acrylic resins (A6) | | | | | | | | |
| | (B) | Acrylic resins (B1) | 40 | 40 | 40 | 40 | 40 | 40 | 40 | 40 |
| | | Hydroxyl group-containing acrylic resin-coated silica particles (E1) | 0.5 | 8.5 | | | | | 5 | |
| | | Hydroxyl group-containing acrylic resin-coated silica particles (E2) | | | 5 | | | | | |
| | | Hydroxyl group-containing acrylic resin-coated silica particles (E3) | | | | 5 | | | | 5 |
| | | Hydroxyl group-containing acrylic resin-coated silica particles (E4) | | | | | 5 | | | |
| | | Silica particle (PGM-ST) | | | | | | | | |
| | (F) | X-40-9250 | 0.5 | 0.5 | 0.5 | 0.5 | 0.5 | | | |
| | | XR31-B1410 (Note 4) | | | | | | | | |
| | | KR-500 (Note 5) | | | | | | | | |
| | | KR-510 (Note 6) | | | | | | | | |
| | Non-aqueous dispersion-type acrylic resin | | 5 | 5 | 5 | 5 | 5 | 5 | 5 | 5 |
| Curing agent component (II) | Name of curing agent component | | II-1 | II-1 | II-1 | II-1 | II-1 | II-1 | II-1 | II-1 |
| | (C) | Sumidur N3300 | 35 | 35 | 35 | 35 | 35 | 35 | 35 | 35 |
| | (D) | Tris (2-ethylhexyl) phosphate | 0.5 | 0.5 | 0.5 | 0.5 | 0.5 | 0.5 | 0.5 | 0.5 |

(continued)

| Examples and Comparative Examples | | Examples | | | | | | | |
|---|---|---|---|---|---|---|---|---|---|
| | | 17 | 18 | 19 | 20 | 21 | 22 | 23 | 24 |
| Evaluation test | Storage stability | S | S | S | S | S | S | S | S |
| | Stain resistance (initial) | S | S | S | S | S | B | A | A |
| | Stain resistance (after accelerated weathering test) | S | S | S | S | S | B | B | B |
| | Transparency of coated film | A | B | A | B | A | A | A | B |
| | Scratch resistance (gloss retention) | B | S | A | S | A | B | A | A |

[Table 6]

| Examples and Comparative Examples | | | | | | | | | |
|---|---|---|---|---|---|---|---|---|---|
| | 1 | 2 | 3 | 4 | 5 | 6 | 7 | 8 | 9 |
| Paint name | X-25 | X-26 | X-27 | X-28 | X-29 | X-30 | X-31 | X-32 | X-33 |

(continued)

| Examples and Comparative Examples | | | | | | | | | | | |
|---|---|---|---|---|---|---|---|---|---|---|---|
| | | | 1 | 2 | 3 | 4 | 5 | 6 | 7 | 8 | 9 |
| Main agent component (I) | Manufacturing Examples | | 37 | 38 | 39 | 40 | 41 | 42 | 43 | 44 | 45 |
| | Name of main agent component | | I-25 | I-26 | I-27 | I-28 | I-29 | I-30 | I-31 | I-32 | I-33 |
| | (A) | Acrylic resins (AI) | 20 | 20 | 20 | | | 20 | 20 | 20 | |
| | | Acrylic resins (A2) | | | | | | | | | |
| | | Acrylic resins (A3) | | | | | | | | | 60 |
| | | Acrylic resins (A4) | | | | | | | | | |
| | | Acrylic resins (A5) | | | | | | | | | |
| | | Acrylic resins (A6) | | | | | | | | | |
| | (B) | Acrylic resins (B1) | 40 | 40 | 40 | 60 | 60 | 40 | 40 | 40 | |
| | (E) | Hydroxyl group-containing acrylic resin-coated silica particles (E1) | | | | | | | | | |
| | | Hydroxyl group-containing acrylic resin-coated silica particles (E2) | | | | | | | | | |
| | | Hydroxyl group-containing acrylic resin-coated silica particles (E3) | | | | | | | | | |
| | | Hydroxyl group-containing acrylic resin-coated silica particles (E4) | | | | | | | | | |
| | | Silica particle (PGM-ST) | | | | | | | | | |
| | (F) | X-40-9250 | 0.5 | 0.1 | 5 | 0.5 | | | 0.5 | | 0.5 |
| | | XR31-B1410 (Note 4) | | | | | | | | | |
| | | KR-500 (Note 5) | | | | | | | | | |
| | | KR-510 (Note 6) | | | | | | | | | |
| | Non-aqueous dispersion-type acrylic resin | | 5 | 5 | 5 | 5 | 5 | 5 | 5 | 5 | 5 |
| Curing agent component (II) | Name of curing agent component | | II-1 | II-1 | II-1 | II-1 | II-1 | II-1 | II-2 | II-2 | II-1 |
| | (C) Sumidur N3300 | | 35 | 35 | 35 | 35 | 35 | 35 | 35 | 35 | 35 |
| | (D) Tris (2-ethylhexyl) phosphate | | 0.5 | 0.5 | 0.5 | 0.5 | 0.5 | 0.5 | | | 0.5 |

(continued)

| Examples and Comparative Examples | | 1 | 2 | 3 | 4 | 5 | 6 | 7 | 8 | 9 |
|---|---|---|---|---|---|---|---|---|---|---|
| Evaluation test | Storage stability | S | S | S | S | S | S | S | S | S |
| | Stain resistance (initial) | S | A | S | S | C | C | C | C | S |
| | Stain resistance (after accelerated weathering test) | C | C | B | C | C | C | C | C | S |
| | Transparency of coated film | A | A | C | B | A | A | B | A | C |
| | Scratch resistance (gloss retention) | B | B | B | B | B | B | B | B | B |

It should be noted that the amounts in the above tables are values of solids content. (Note 4) XR31-B1410: trade name, manufactured by Momentive, alkoxysilyl group-containing organopolysiloxane, number-average molecular weight 800 (Note 5) KR-500: trade name, alkoxysilyl group-containing organopolysiloxane, manufactured by Shin-Etsu Chemical Co., Ltd., number-average molecular weight 900 (Note 6) KR-510: trade name, alkoxysilyl group-containing organopolysiloxane, manufactured by Shin-Etsu Chemical Co., Ltd., number-average molecular weight 950

[Manufacturing of test plate]

Electron GT-10 (manufactured by Kansai Paint Co., Ltd., trade name, a thermosetting epoxy resin cationic electrodeposition coating material) was applied by electrodeposition to a dull steel plate (thickness 0.8 mm) treated with zinc phosphate so that a cured film thickness was 20 μm, and thermally cured at 170°C. for 30 minutes. Then, Amilac TP-67-P (manufactured by Kansai Paint Co., Ltd., trade name, a polyester/melamine resin intermediate coating paint for automobiles, coating color: dark gray) was painted by air spraying so that a film thickness was 35 μm, and thermally cured at 140°C. for 30 minutes. Subsequently, two of the intermediate coated plates were prepared, and an aqueous base coat "WBC713T" (trade name, manufactured by Kansai Paint Co., Ltd., an acrylic melamine resin aqueous metallic color base coating material) was applied to the intermediate coating film so that a cured film thickness was 15 μm. One of them was preheated at 80°C for 5 minutes, and the other was thermally cured at 140°C for 30 minutes. The coating materials (X-1) to (X-33) obtained in Examples and Comparative Examples were each coated by air spraying to the two coated plates so that a cured film thickness was 35 μm, which were allowed to stand at room temperature for 7 minutes, and then thermally cured at 140°C for 30 minutes.

It should be noted that the coating materials (X-1) to (X-33) were coated within one hour after mixing the components (I) and (II).

[Evaluation test]

<Storage stability>

The coating materials (X) used in Examples and Comparative Examples were stored in an environment at a temperature of 20°C and a humidity of 60% for 72 hours, and the states of the coating materials were evaluated according to the following criteria. It should be noted that the respective components of the coating materials (X-1) to (X-33) were observed without mixing the components (I) and (II).

S: Both Components (I) and (II) had a viscosity of less than +20 seconds of the initial viscosity at 20°C with a Ford Cup No. 4 after the storage test, and no significant change was observed.

C: Components (I) and (II) had a viscosity of more than +20 seconds of the initial viscosity at 20°C with a Ford Cup No. 4 after the storage test, or were gelled.

<Stain resistance (initial)>

Each of the obtained test plates (within 2 hours after baking and curing) was stained by coloring with spotting using an oil-based black permanent marker. Subsequently, the stained portion was wiped with a dry Kimwipe (trade name), and observed to be evaluated according to the following criteria. It should be noted that the test was conducted using the two coated plates, i.e., in the case of preheating an aqueous base coat (uncured) and in the case of thermally curing the aqueous base coat, but there was no difference.

S: No stain was observed.
A: No stain (color) was observed but stain marks can be slightly seen.
B: A stain (color) is slightly left.
C: A stain is significantly left.

<Stain resistance (after accelerated weathering test)>

After each of the obtained test plates was tested for 600 hours in a "Sunshine Weather o Meter" (manufactured by Suga Test Instruments Co., Ltd., accelerated weathering test apparatus), the coated plates were stained by coloring with spotting using an oil-based black permanent marker. Subsequently, the stained portion was wiped with a dry Kimwipe (trade name), and observed to be evaluated according to the following criteria. It should be noted that the test was conducted using the two coated plates, i.e., in the case of preheating an aqueous base coat (uncured) and in the case of thermally curing the aqueous base coat, but there was no difference.

S: No stain was observed.
A: No stain (color) was observed but stain marks can be slightly seen.
B: A stain (color) is slightly left.
C: A stain is significantly left.

<Transparency of coating films>

The coating materials (X) obtained in Examples and Comparative Examples were coated by air spray on the glass plate so that a cured film thickness was 35 μm, which were allowed to stand at room temperature for 7 minutes, and then thermally cured at 140°C for 30 minutes. The appearance of the coating films was then visually observed.

A: Transparency or slight turbidity can be observed.
B: Cloudiness can be observed but has transparency (can see through to the other side).
C: Significant cloudiness and no transparency (cannot see through to the other side).

<Scratch resistance (gloss retention)>

Each of the obtained test plates was fixed to a test stand of a car washer tester (manufactured by Amtec, Inc., Car-wash Lab Apparatus) under an atmosphere of 20°C. A car wash brush was rotated at 127 rpm and allowed to reciprocate on the test stand 10 times while spraying the test solution obtained by mixing Sikron SH 200 (trade name, silica particles of 24 μm, manufactured by Quarzwerke GmbH) of 1.5 g with 1 liter of water on the test stand. After rinsing and drying, the 20 degree gloss before and after the test was measured using a gloss meter (manufactured by Byk Gardner, Instrument name: Micro Tri Gross), and gloss retention was calculated using the following formula.

$$\text{Gloss retention (\%)} = \text{gloss after the test / initial gloss} \times 100$$

It should be noted that the test was conducted using the two coated plates, i.e., in the case of preheating an aqueous base coat (uncured) and in the case of thermally curing the aqueous base coat, but there was no difference.

S: 85% or more.
A: 70% or more to less than 85%.
B: 50% or more to less than 70%.
C: less than 50%.

## Claims

1. A coating composition comprising a silyl group-containing acrylic resin (A), a silyl group-free acrylic resin containing hydroxyl group (B), a polyisocyanate compound (C), and a catalyst (D), wherein the silyl group-containing acrylic resin (A) contains at least one polydimethyl siloxane segment.

2. The coating composition according to Claim 1 comprising a hydroxyl group-containing acrylic resin-coated silica particle (E).

**3.** The coating composition according to Claim 1 or Claim 2 comprising an alkoxysilyl group-containing organopolysiloxane (F).

**4.** The coating composition according to any one of Claims 1 to 3, wherein the silyl group-containing acrylic resin (A) comprises 0.1 parts by mass or more of a polymerizable unsaturated monomer (a1) having the polydimethyl siloxane segment in its structure based on 100 parts by mass of all monomers.

**5.** The coating composition according to any one of Claims 1 to 4, wherein the silyl group-containing acrylic resin (A) is obtained by copolymerization of a/the polymerizable unsaturated monomer (a1) having the polydimethyl siloxane segment represented by the following formula (1) and/or (2), a hydrolyzable silyl group-containing polymerizable unsaturated monomer (a2), a hydroxyl group-containing polymerizable unsaturated monomer, and as needed, other polymerizable unsaturated monomers that can be copolymerized with these monomers.

[Chem. 1]

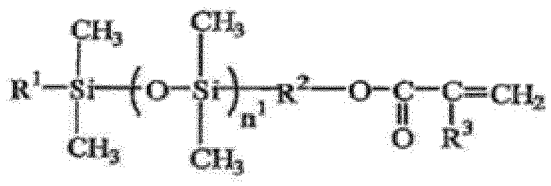

(1)

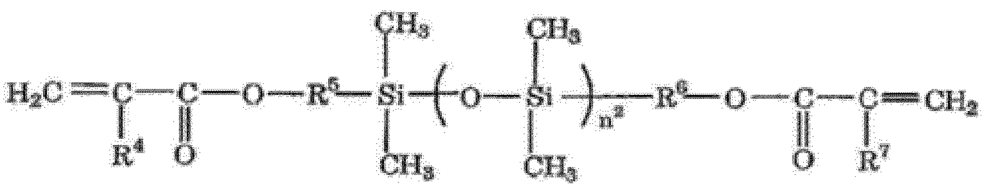

(2)

(in the formula, $R^1$ represents an alkyl group containing 1 to 10 carbon atoms, $R^2$ represents a divalent hydrocarbon group containing 1 to 6 carbon atoms, $R^3$ represents a hydrogen atom or a methyl group, $R^4$ and $R^7$ are identical or different, and each represents a hydrogen atom or a methyl group, $R^5$ and $R^6$ are identical or different, and each represents a divalent hydrocarbon group containing 1 to 6 carbon atoms, and $n^1$ and $n^2$ each indicate the number of repeating dimethyl siloxane units, and are each 6 to 300, or preferably 6 to 100.)

**6.** A coating composition of multi-pack type, comprising:

a main agent component (I) containing a silyl group-containing acrylic resin (A) containing at least one polydimethyl siloxane segment, a silyl group-free acrylic resin containing hydroxyl group (B); and
a curing agent component (II) containing a polyisocyanate compound (C).

**7.** A coating film formation method of forming a top coating film by coating the coating composition according to any one of Claims 1 to 6.

**8.** A coating film formation method of performing atomized spray coating of the coating composition according to any one of Claims 1 to 6, and forming a top coating film having a cured film thickness of 1 to 50 μm, and then thermally curing it at a temperature of 70 to 200°C.

**9.** A method of forming a multilayer coating film, comprising sequentially performing:

a step of forming a color coating film by coating a color coating composition;
a step of coating the coating composition according to any one of Claims 1 to 6 on the color coating film to form a top coating film; and
a step of thermally curing the color coating film and the top coating film simultaneously.

**10.** A method of forming a multilayer coating film comprising sequentially performing:

a step of performing atomized spray coating of a color coating composition to form a color coating film having

a cured film thickness of 1 to 50 μm;
a step of performing atomized spray coating of the coating composition according to any one of Claims 1 to 6 on the color coating film to form a top coating film having a cured film thickness of 1 to 50 μm; and
a step of thermally curing the color coating film and the top coating film simultaneously at a temperature of 70 to 200°C.

## INTERNATIONAL SEARCH REPORT

International application No. PCT/JP2020/043742

A. CLASSIFICATION OF SUBJECT MATTER

B05D 1/36(2006.01)i; B05D 7/24(2006.01)i; C08F 20/28(2006.01)i; C09D 133/00(2006.01)i; C09D 133/14(2006.01)i; C09D 175/04(2006.01)i; C09D 183/04(2006.01)i; C09D 7/62(2018.01)i; C09D 7/63(2018.01)i; C09D 7/65(2018.01)i

FI: C09D133/14; C09D175/04; B05D7/24 302Y; B05D7/24 302P; B05D7/24 302T; C09D7/62; C09D7/65; C09D183/04; C09D7/63; C08F20/28; B05D1/36 B; C09D133/00

According to International Patent Classification (IPC) or to both national classification and IPC

B. FIELDS SEARCHED

Minimum documentation searched (classification system followed by classification symbols)

B05D1/36; B05D7/24; C08F20/28; C09D133/00; C09D133/14; C09D175/04; C09D183/04; C09D7/62; C09D7/63; C09D7/65

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2003-49116 A (KANSAI PAINT CO., LTD.) 21 February 2003 (2003-02-21) claims 2-3, 7, example 2, paragraphs [0064]-[0065], [0068], [0070] | 1, 4-5, 7-10<br>2-3, 6 |
| A | JP 2003-89764 A (NISSAN MOTOR CO., LTD.) 28 March 2003 (2003-03-28) entire text | 1-10 |
| A | JP 2004-359824 A (HONDA MOTOR CO., LTD.) 24 December 2004 (2004-12-24) entire text | 1-10 |
| A | JP 2005-82772 A (KANSAI PAINT CO., LTD.) 31 March 2005 (2005-03-31) entire text | 1-10 |

☒ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 02 February 2021 (02.02.2021) | 09 February 2021 (09.02.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2020/043742

C (Continuation). DOCUMENTS CONSIDERED TO BE RELEVANT

| Category* | Citation of document, with indication, where appropriate, of the relevant passages | Relevant to claim No. |
|---|---|---|
| A | WO 2006/001510 A1 (KANSAI PAINT CO., LTD.) 05 January 2006 (2006-01-05) entire text | 1-10 |
| A | WO 2019/168041 A1 (KANSAI PAINT CO., LTD.) 06 September 2019 (2019-09-06) entire text | 1-10 |

Form PCT/ISA/210 (continuation of second sheet) (January 2015)

**INTERNATIONAL SEARCH REPORT**
Information on patent family members

International application No.
PCT/JP2020/043742

| Patent Documents referred in the Report | Publication Date | Patent Family | Publication Date |
|---|---|---|---|
| JP 2003-49116 A | 21 Feb. 2003 | (Family: none) | |
| JP 2003-89764 A | 28 Mar. 2003 | US 2003/0064229 A1 entire text EP 1295914 A2 | |
| JP 2004-359824 A | 24 Dec. 2004 | US 2005/0009983 A1 entire text EP 1484349 A2 | |
| JP 2005-82772 A | 31 Mar. 2005 | (Family: none) | |
| WO 2006/001510 A1 | 05 Jan. 2006 | US 2008/0076883 A1 entire text CA 2578351 A1 | |
| WO 2019/168041 A1 | 06 Sep. 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006001510 A
- JP HEI1036771 A
- JP 2019168041 A
- JP HEI1157608 A